# FASCICULE DE BREVET EUROPEEN

(11) **EP 2 721 198 B1**
(45) Date de publication et mention de la délivrance du brevet: **03.04.2019**
(21) Numéro de dépôt: 12729532.7
(22) Date de dépôt: 18.06.2012
(51) Int. Cl.: C25B 1/26, C25B 9/00, C25B 9/18, C25B 15/02, C02F 1/461, C02F 1/467

(54) **DISPOSITIF DE FABRICATION D'HYPOCHLORITE DE SODIUM OU D'ACIDE HYPOCHLOREUX ET SYSTEME DE TRAITEMENT DES EAUX EN GENERAL**
VORRICHTUNG ZUR HERSTELLUNG VON NATRIUMHYPOCHLORIT ODER HYPOCHLORSÄURE UND WASSERBEHANDLUNGSSYSTEM IM ALLGEMEINEN
DEVICE FOR MANUFACTURING SODIUM HYPOCHLORITE OR HYPOCHLOROUS ACID AND WATER TREATMENT SYSTEM IN GENERAL

(30) Priorité: 16.06.2011 FR 1101845
(43) Date de publication de la demande: 23.04.2014
(73) Titulaire: MP Technic, 13090 Aix en Provence (FR)
(72) Inventeur: POYET, Michel, F-13090 Aix en Provence (FR)
(74) Mandataire: Roman, Alexis
(86) Numéro de dépôt international: PCT/EP2012/061620
(87) Numéro de publication internationale: WO 2012/172118

(56) Documents cités:
- WO-A-90/10734
- WO-A1-2006/004539
- DE-A1-102009 033 153
- US-A- 3 785 951
- US-A- 3 835 020
- US-A- 4 260 468
- US-A- 4 439 295
- US-A- 5 034 110
- US-A- 5 037 519
- US-A- 5 807 473

## Description

### ETAT DE LA TECHNIQUE EN COURS

Pour traiter l'eau en circulation et la rendre potable dans les circuits d'eau d'immeubles, de maisons, de collectivités, d'industries en général, de bassins de rétention et de piscines, il est couramment utilisé des adjonctions de différents produits chimiques, à partir de pompes doseuses mécaniques.

Ces systèmes sont astreignants et nécessitent une surveillance quasiment quotidienne. L'entretien est difficile et demande du personnel qualifié. En plus, ils obligent la fabrication, le transport et le stockage de produits chimiques dangereux.

Depuis plusieurs années, différentes techniques sont apparues sur le marché du traitement de l'eau potable. Nous les classons en plusieurs catégories.

**La première catégorie** qui semble la plus importante, est les systèmes utilisant une membrane échangeuse d'ions qui sépare une cuve en deux compartiments.

Le premier compartiment devant recevoir une électrode en graphite (l'anode) qui va tremper dans une solution saturé en sel (ci-après NACL).

Le deuxième compartiment reçoit la deuxième électrode (la cathode) généralement en titane. Elle ne sert que pour l'échange électrique entre les deux électrodes. Elle ne trempe pas dans la saumure, mais dans de l'eau.

Un courant en basse tension est envoyé sur les électrodes pour réaliser une électrolyse. Lors de cette électrolyse le NACL va se décomposer en deux parties (HClO et OCl⁻) pour former de l'acide hypochloreux (HClO) sous forme gazeuse. Ce gaz est ensuite aspiré par effet venturi pour être mélangé à l'eau à traiter.

### Ce principe de fonctionnement est très contraignant pour plusieurs raisons :

La première : pour évacuer le gaz formé lors de l'électrolyse, il faut réaliser un système venturi sur la tuyauterie. Ce système réduit considérablement le diamètre de la tuyauterie, donc son débit.

La deuxième : sur un bassin ou sur une piscine, lorsque l'on bride une canalisation, le débit d'eau n'est plus respecté et par conséquence l'eau à filtrer, n'est plus filtrée correctement. En effet, le débit de la pompe et le diamètre du filtre ont été choisis lors de l'étude de l'installation, par rapport à un volume et un débit d'eau précis. Si ces paramètres sont modifiés, l'efficacité de la filtration est diminuée.

La troisième : le gaz fabriqué sous cette forme est dangereux et doit être immédiatement injecté dans de l'eau. Si le flux d'eau est diminué ou quasiment nul et que l'électrolyse continue à ce faire, alors que le système ne comporte pas de sécurité, le gaz fabriqué peut se disperser dans l'air, avec des risques de toxicité importante pour un utilisateur.

La quatrième : la membrane qui sépare dans le bac, l'anode de la cathode est très fragile. Elle ne supporte pas l'eau calcaire. C'est pour cette raison que certains fabricants conseillent d'utiliser un adoucisseur en amont, réglé à 0 degré TH. D'autres ont incorporés directement un adoucisseur à leur système. Ces appareils limitent les débits d'eau à traiter. D'autres, préconisent une cartouche remplie de résines anioniques qui vont capter les ions calcium. Le débit d'eau à traiter est encore plus fortement diminué.

La cinquième : la plupart de ces systèmes utilisent des électrodes en graphite pour l'anode. Le graphite à une durée de vie très court (en moyenne 6 mois). Ce qui en fait un système contraignant dans son utilisation. Il n'est, dans ces conditions plus automatique.

**La deuxième catégorie** concerne des systèmes d'électrochloration qui produisent de l'acide hypochloreux à partir d'une concentration précise de NACL dilué dans l'eau d'un bassin ou d'une piscine. Ces systèmes sont limités à des bassins, des réserves d'eau ou des piscines qui utilisent des pompes de recirculation et ne peuvent pas traiter de l'eau en direct.

### Le principe de fonctionnement est le suivant :

Le sel est versé directement dans l'eau à traiter et la concentration en NACL varie de 2 à 7 grs par litre d'eau à traiter, en fonction de la surface des plaques qui constituent les électrodes et le courant envoyé sur celles-ci.

L'eau chargée en sel passe à travers ces électrodes de type connu, dans des conditions telles que l'on décompose le chlorure de sodium suivant des réactions électrochimiques connues, pour obtenir la quantité d'hypochlorite de sodium nécessaire pour maintenir un taux de chlore actif qui désinfecte l'eau. Ainsi, le produit désinfectant est crée en continu pendant les cycles de filtration.

Il agit sur les bactéries, sur les microorganismes pour les détruire et rendre l'eau saine.

Par contre, ces systèmes ne peuvent pas êtres utilisés pour traiter les eaux de consommations, car sa teneur en NACL est trop importante. Ils ne peuvent pas non plus, êtres utilisés pour traiter l'eau des circuits divers (comme les circuits d'eau froide, les circuits d'eau chaude des immeubles, en milieu industriel comme les tours de refroidissements ou des collectivités, ni dans des circuits de chauffage). La concentration en NACL élevée corroderait rapidement les tuyaux ou les pièces métalliques de ces ensembles.

### Ce principe de fonctionnement est contraignant pour plusieurs raisons :

La première : La charge dans le bassin est importante (500kg environ pour un bassin de 100 m³). Cette charge coûte cher, et les professionnels qui utilisent cette technique doivent stocker des palettes de NACL en grande quantité.

La seconde : le NACL est un produit très corrosif et l'eau chargée en NACL va progressivement détériorée les éléments qui trempent dans l'eau. Pour les bassins, dont le revêtement est en béton, doucement il va se détruire. Dans une piscine, ce sont les margelles qui vont se détruirent. Les parties métalliques comme les échelles, vont se détériorer aussi très rapidement. Pour un volet de protection qui, par exemple, recouvre une piscine, les pièces qui le constituent comme les axes des moteurs ou les lames, vont se détériorer aussi.

**La Troisième catégorie** concerne des systèmes qui utilisent deux bacs séparés.

Un premier bac rempli d'eau saturée en NACL dans lequel une électrolyse est réalisée, pour produire de l'acide hypochloreux. Cet acide hypochloreux est ensuite pompé pour l'injecter dans un deuxième bac fermé et étanche qui sert de stockage. Ensuite, une deuxième pompe va aspirer ce produit réalisé qui est un puissant désinfectant, pour l'injecter dans le circuit d'eau à traiter.

Ce principe de fonctionnement n'est pas facile à utiliser car il est très technique. Il demande une surveillance importante de la part d'une personne bien formée. Il n'est pas à mettre dans les mains de tout le monde. L'ensemble est source de problèmes techniques, dont tout particulièrement les pompes doseuses.

**La Quatrième catégorie** concerne des systèmes qui font une électrolyse de l'eau saturée en NACL directement dans un bac relié à la canalisation de l'eau à traiter, soit par aspiration par effet venturi de l'eau chargée en acide hypochloreux, soit par dégazage naturel de l'acide hypochloreux directement dans l'eau à traiter.

### Ces systèmes comportent plusieurs problèmes :

Le premier : pour les systèmes qui dégazent directement dans l'eau à traiter la technique utilisée pour réaliser l'électrolyse n'est suffisamment fiable. En effet, ils utilisent des électrodes qui ne sont pas bipolaires, car elles sont constituées de graphite. Le graphite a rendement faible pour la fabrication d'hypochlorite de sodium. La production moyenne de ce type de systèmes est de l'ordre de 7 Grs/heure, ce qui n'est pas très économique et intéressant.

Le second : Au fur et à mesure de l'utilisation, le calcium présent dans l'eau se solidifie sur une des électrodes et l'échange électrique ne se fait plus.

Le troisième : dans cette configuration, les électrodes qui ne sont pas séparées par une membrane sont en contact direct avec les pastilles de sel solides dans le bac de stockage. En plus, une partie de ces pastilles ne vont pas se dissoudrent, car l'eau est saturée en NACL. Lors de l'électrolyse, les pastilles de sel solide vont favoriser des courts circuits entre les deux électrodes. De ce fait, les électrodes se détruisent rapidement.

Le quatrième : la cuve dans laquelle sont insérées les électrodes n'est pas très pratique. Les électrodes sont longues et sont rentrées par la partie supérieure. Lorsqu'il faudra les remplacer, si la hauteur du local technique dans lequel est installé l'appareil, n'est pas suffisante, le remplacement sera dans ce cas impossible.

Le cinquième : ils ne sont pas équipés d'éléments de sécurité pour arrêter la fabrication d'acide hypochloreux et, en cas de dysfonctionnement le gaz peut se compresser, jusqu'à provoquer une explosion.

En conclusion, ce type de systèmes peut être dangereux pour l'utilisateur et leur rendement en production d'acide hypochloreux est trop faible.

Référence des brevets existants se référant à l'invention: EP0686709 / EP0909739 / WO2009007691 / WO0118279 / WO09300460 / EP1728768 / FR2888837 / WO2006055361 / WO011/8279 / WO03055806 / WO03055806 / EP0063420 / EP0686709 / WO9951332 / WO2010/0111989 / WO2006/015071 / WO2007092172 / US4596648 / FR2576325 / WO2004108613 / WO2005009906 / WO2007092754 / WO03055806 / US5037519 / WO9010734 / US3835020.

L'invention propose un dispositif de production d'hypochlorite de sodium ou d'acide hypochloreux pour le traitement des eaux selon la revendication 1, le dispositif étant adapté à être connecté directement sur une canalisation d'eau à traiter sous pression, le dispositif comportant :
- un cylindre de stockage de sel sous forme solide, le cylindre étant adapté pour être alimenté directement par la canalisation d'eau à traiter sous pression, le cylindre comprenant un ou plusieurs tubes formant une ou plusieurs chambres électrolytiques ;
- une ou plusieurs cellules électrolytiques reçues dans l'une ou les plusieurs chambres électrolytiques, l'une ou les plusieurs cellules électrolytiques comprenant des électrodes ;
l'un ou les plusieurs tubes du cylindres étant troués pour permettre la mise en contact de l'une ou des plusieurs cellules électrolytiques avec l'eau saturée en sel en évitant que des électrodes de l'une ou des plusieurs cellules électrolytiques ne soient mises en court circuit par le sel solide provenant du cylindre.

Selon une variante, le sel n'est pas dans l'eau à traiter.

Selon une variante, l'une ou les plusieurs cellules électrolytiques sont insérées dans l'une ou les plusieurs chambres électrolytiques en étant reçues par vissage dans l'une ou les plusieurs chambres électrolytiques.

Selon une variante, le dispositif comporte :
- sur le cylindre une partie plane dans presque toute sa hauteur pour permettre le collage et l'étanchéité de la ou les chambres électrolytiques recevant la ou les cellules électrolytiques ;
- un raccord union qui permet de démonter la partie supérieure et de la libérer de la canalisation d'eau à traiter sous pression.

Selon une variante, le dispositif comporte:
- trois parties sur la hauteur, dont une partie basse qui sert de support général, une partie centrale comprenant le stockage du sel et prévue pour y réaliser une électrolyse pour la production d'hypochlorite de sodium ou d'acide hypochloreux à partir de l'eau saturée en sel et une partie haute comprenant la fermeture du cylindre et le raccord à la canalisation de l'eau à traiter, qui permet de démonter la partie supérieure et de la libérer de la canalisation de l'eau à traiter.

Selon une variante, le dispositif comporte:
- une électrovanne prévue pour s'ouvrir régulièrement pour laisser échapper les gaz fabriqués et se fermer lorsque le dispositif s'arrête, afin que l'eau contenue dans le cylindre ne soit quasiment jamais en contact direct avec l'eau qui circule dans la canalisation d'eau à traiter sous pression.

Selon une variante, l'un ou les tubes du cylindre sont troués pour permettre la mise en contact de l'une ou des cellules électrolytiques avec l'eau saturée en sel en évitant que l'une ou les cellules électrolytiques ne soient mises en contact direct avec le sel solide stocké dans le cylindre.

Selon une variante, l'une ou les plusieurs cellules électrolytiques sont à changement de polarité.

Selon une variante, l'une ou les plusieurs cellules électrolytiques sont composées d'une ou plusieurs plaques de préférence de 2 à 20 unités réalisées en titane recouvert d'oxydes métalliques.

L'invention propose en outre un système de traitement des eaux selon la revendication 5, le système de traitement des eaux comprenant entre autres
- le dispositif précédent de fabrication d'hypochlorite de sodium ou d'acide hypochloreux ;
- une canalisation d'eau à traiter sous pression ;
- une jonction de la canalisation et du cylindre du dispositif ;
- une unité de commande commandant la fabrication d'hypochlorite de sodium ou d'acide hypochloreux.

Selon une variante, le système comporte un détecteur de débit qui est positionné sur la canalisation, en amont de la jonction pour détecter ou non un flux d'eau dans la canalisation pour la mise en marche ou non du dispositif par l'unité de commande.

Selon une variante, le système comporte dans la canalisation:
- après le détecteur de débit et en amont de la jonction et du dispositif, une électrode Redox ou Ampérométrique d'analyse du pouvoir oxydant de l'eau pour réguler le pouvoir oxydant de l'eau en autorisant ou non la production d'hypochlorite de sodium ou d'acide hypochloreux ;
- après l'électrode Redox ou Ampérométrique, une électrode de pH, qui permet d'analyser et de réguler le pH de l'eau à traiter.

Selon une variante, le système comporte:
- un pressostat positionné sur le cylindre du dispositif dans sa partie supérieure pour détecter une pression trop importante à laquelle l'unité de commande pilote l'arrêt de la fabrication d'hypochlorite de sodium ou d'acide hypochloreux ;
- un robinet de vidange dans sa partie inférieure pour permettre l'entretien du dispositif.

Selon une variante, la canalisation comprend, en aval de la jonction avec le dispositif :
- un clapet à bille inversé apte, à l'arrêt de la circulation d'eau dans la canalisation, à aspirer de l'air et purger la canalisation.

L'invention propose encore un ensemble de traitement des informations à distance d'un dispositif de fabrication d'hypochlorite de sodium ou d'acide hypochloreux, l'ensemble comprenant :
- le système selon précédent ; et un système de transmission des informations à distance vers un stockage centralisé des informations sur un serveur ou vers un télé-dépanneur comprenant un organe de communication à distance choisi parmi le groupe formé d'une prise courant porteur émettrice/réceptrice, émetteur/récepteur GPRS, émetteur/récepteur WIFI.

L'invention propose encore un ensemble de traitement des informations à distance d'un dispositif de fabrication d'hypochlorite de sodium ou d'acide hypochloreux, l'ensemble comprenant :
- le système selon précédent dont l'unité de commande comprend un organe collecteur de données sur l'état de fonctionnement et de dysfonctionnement du dispositif ;
- un système de transmission des informations à distance, le système étant externe à l'unité de commande et prévu pour communiquer par courant porteur avec l'organe collecteur de données, le système de transmission des informations à distance comprenant un modem d'envoi à distance des données collectées par l'organe collecteur et reçues par l'unité de commande.
- un logiciel de traitement des données transmises par le système de transmission des informations à distance à l'aide du modem.

L'invention propose aussi un procédé de traitement d'eau selon la revendication 11 comprenant:
la fourniture d'un dispositif précédent de production d'hypochlorite de sodium ou d'acide hypochloreux ;
le raccordement du dispositif à une canalisation de l'eau à traiter sous pression de manière à former le système précédent de traitement des eaux ;
la production d'hypochlorite de sodium ou d'acide hypochloreux à l'aide du système de traitement d'eaux ;
la désinfection de l'eau à traiter à l'aide de la production d'hypochlorite de sodium ou d'acide hypochloreux.

Selon une variante, la canalisation de l'eau à traiter sous pression est une canalisation de refoulement d'une installation de piscine.

L'invention propose enfin un procédé de traitement des informations à distance d'un dispositif de fabrication d'hypochlorite de sodium ou d'acide hypochloreux, à l'aide de l'ensemble de traitement précédent selon la revendication 13, le procédé comprenant:
- la collecte de données sur l'état de fonctionnement et de dysfonctionnement du dispositif par l'organe collecteur de données du dispositif ;
- la communication, via courant porteur, au système de transmission des informations à distance, des données collectées par l'organe collecteur de données ;
- la transmission des données à distance par le système de transmission des informations à distance, via son modem, les données étant traitées par le logiciel de traitement.

Selon une variante, le procédé comprend en outre, après le traitement des données transmises à distance :
- l'adaptation de la commande du dispositif par l'envoi d'instructions d'adaptation de la commande du dispositif au système de transmission des informations à distance.

Le dispositif selon l'invention permet de remédier aux inconvénients et défauts de ces différents brevets définis en références précédemment. En particulier il améliore les procédés traditionnels, en ce sens qu'il réduit considérablement les charges de sel à mettre dans l'eau pour les bassins, les réserves ou les piscines. En effet, pour les systèmes qui utilisent une eau chargée en sel, lorsqu'un lavage de filtre est effectué, l'eau de ces lavages est déversée dans la nature et cette eau surchargée en sel aura un effet négatif sur l'environnement. L'invention remédie aussi à ce problème en supprimant dans l'eau de ces installations le sel. En outre, pour le traitement des eaux potables des collectivités, des immeubles, des industries, pour le traitement des tours de refroidissement et des réseaux d'eau en général, il supprime les pompes doseuses qui sont souvent sources de pannes. Il permet aussi, d'éviter le transport, le stockage de produits chimiques dangereux tels que le chlore et ses dérivés, surtout s'ils sont liquides.

La désinfection est un stade important du traitement des eaux. Elle a un but hygiénique qui évite la transmission des maladies qui sont nombreuses, si l'eau est mal traitée. On estime qu'un enfant meurt toutes les minutes, dans le monde, suite à l'absorption d'une eau de mauvaise qualité. L'invention s'installe facilement et peut régler rapidement ce problème à moindre coût, n'importe où dans le monde.

Le dispositif est proposé pour le traitement des eaux tel que le traitement des eaux potables des collectivités, les immeubles, l'industrie en général, l'industrie chimique, les industries de la peinture et de la chaux, l'industrie alimentaire, l'industrie du verre, l'industrie du papier, l'industrie pharmaceutique, l'industrie du textile, l'industrie de synthèse, l'industrie du dépôts et de traitement des déchets, le traitement des tours de refroidissement, l'agriculture, les bassins, les réserves d'eau, les piscines et les réseaux d'eau en général.

Selon un aspect de l'invention il est particulièrement proposé : Un dispositif de fabrication d'hypochlorite de sodium ou d'acide hypochloreux, (qui est un puissant désinfectant) installé en direct sur une tuyauterie de circulation d'eau dans le but de la traiter. Ce dit système, est composé d'une ou plusieurs chambres électrolytiques dans lesquelles viennent s'insérer, une ou plusieurs cellules bipolaires électrolytiques. Ces cellules bipolaires électrolytiques sont composées de plusieurs plaques d'une épaisseur suffisante pour êtres rigides, et dans un métal spécifique comme le titane, recouvert d'oxydes métalliques, tels que le ruthénium et l'iridium en plusieurs couches successives. Les chambres électrolytiques qui vont recevoir ces cellules bipolaires électrolytiques sont constituées d'un tube percé de trous d'un diamètre inférieur à une pastille de sel traditionnelle pour éviter qu'elles ne soient en contact direct avec le NACL solide, mais seulement en contact avec l'eau saturée en NACL. Les chambres électrolytiques comportant les cellules électrolytiques bi polaires sont insérées dans un cylindre sous pression dans lequel est stocké le sel. Le tout étant piloté par un boîtier de commande spécifique. Ce boîtier permettant d'analyser la concentration d'oxydant dans l'eau ainsi que du pH de l'eau. Il comprend un dispositif de transmission des informations à distance vers un stockage centralisé des informations sur un serveur ou vers un télé-dépanneur. Le dispositif de communication à distance comprenant un organe de communication à distance choisi parmi le groupe formé d'une prise courant porteur émettrice/réceptrice, émetteur/récepteur GPRS, émetteur/récepteur WIFI.

Il est proposé, un dispositif de fabrication d'hypochlorite de sodium ou d'acide hypochloreux qui comporte :
Un cylindre qui va permettre de stocker le sel et d'y insérer une ou plusieurs chambres électrolytiques dans lesquelles viennent se visser une ou plusieurs cellules électrolytiques bipolaires. Ce cylindre est installé sur l'arrivée d'eau principale pour le traitement des eaux potables des collectivités, les immeubles, l'industrie en général, l'industrie chimique, les industries de la peinture et de la chaux, l'industrie alimentaire, l'industrie du verre, l'industrie du papier, l'industrie pharmaceutique, l'industrie du textile, l'industrie de synthèse, l'industrie du dépôt et du traitement des déchets, le traitement des tours de refroidissement, l'agriculture, les bassins, les réserves d'eau, les piscines et les réseaux d'eau en général.
- Il est installé de préférence sur le refoulement quand il s'agit d'une piscine, d'un bassin ou d'une réserve.

Le dispositif de fabrication d'hypochlorite de sodium ou d'acide hypochloreux peut comporter
- Sur le cylindre une partie plane dans presque toute sa hauteur qui va permettre de coller et de rendre étanche une ou plusieurs chambres électrolytiques qui vont recevoir une ou plusieurs cellules électrolytiques.
- Une jonction du diamètre de la canalisation à traiter.
- Un raccord union qui permet de démonter la partie supérieure et de la libérer de la canalisation de l'eau à traiter.

Le dispositif de fabrication d'hypochlorite de sodium ou d'acide hypochloreux peut comporter en amont de la jonction de la tuyauterie et du dit cylindre:
- Un détecteur de débit qui est positionné en amont sur la tuyauterie principale qui permet de détecter ou non un flux d'eau. En fonction de l'information le dispositif de fabrication d'hypochlorite de sodium ou d'acide hypochloreux, est arrêté ou non.

Le dispositif de fabrication d'hypochlorite de sodium ou d'acide hypochloreux peut comporter:
- Après le détecteur de débit et en amont de la jonction de la tuyauterie et du dispositif, une électrode Redox ou Ampérométrique, qui permet d'analyser le pouvoir oxydant de l'eau. En fonction du résultat le dispositif de fabrication d'hypochlorite de sodium ou d'acide hypochloreux, est arrêté ou non.
- Une électrode de pH, qui permet d'analyser et de réguler le pH de l'eau à traiter.

Le dispositif de fabrication d'hypochlorite de sodium ou d'acide hypochloreux peut comporter:
- une électrovanne pilotée par une unité de commande, qui s'ouvre régulièrement pour laisser échapper les gaz fabriqués ou qui s'ouvre lorsqu'une pression trop implorante dans le cylindre est détectée. De cette manière l'eau contenue dans le cylindre principal, n'est quasiment jamais en contact direct avec l'eau à traiter qui circule dans les tuyauteries. En plus, la saumure contenue dans la cuve a une durée de vie prolongée.

Le dispositif de fabrication d'hypochlorite de sodium ou d'acide hypochloreux peut comporter sur le dit cylindre dans sa partie supérieure:
- un pressostat qui permet de détecter une pression de gaz trop importante. En fonction de l'information une unité de commande pilote le dispositif de fabrication d'hypochlorite de sodium ou d'acide hypochloreux, pour l'arrêter ou non.

Le dispositif de fabrication d'hypochlorite de sodium ou d'acide hypochloreux peut comporter sur le dit cylindre sur sa hauteur :
- une ou plusieurs ouvertures permettant d'y insérer une ou plusieurs chambres électrolytiques dans lesquelles viennent se visser une ou plusieurs cellules électrolytiques bipolaires.
- Ces cellules électrolytiques bipolaires sont composées de plusieurs plaques de préférence dans l'invention de 2 à 20 unités.

Les chambres électrolytiques du dispositif de fabrication d'hypochlorite de sodium ou d'acide hypochloreux peuvent être constituées :
- D'un tuyau d'un diamètre suffisant pour permette d'insérer les cellules électrolytiques bipolaires. Ce tuyau est fermé dans sa partie basse pour éviter que le NACL sous forme solide rentre à l'intérieur de ce tuyau. Il est ouvert dans sa partie supérieure pour venir y visser les cellules électrolytiques bipolaires. Sur toute sa longueur, il est percé de trous d'un diamètre inférieur à celui de la pastille de NACL pour éviter tout contact direct entre les cellules électrolytiques bipolaires et le NACL sous forme solide, tout en étant en contact avec l'eau saumâtre.

Le dispositif de fabrication d'hypochlorite de sodium ou d'acide hypochloreux peut comporter sur le dit cylindre dans sa partie inférieure :
- Un robinet de vidange pour permettre l'entretien du dispositif.

Le dispositif de fabrication d'hypochlorite de sodium ou d'acide hypochloreux peut comporter un système de transmission des informations à distance vers un stockage centralisé des informations sur un serveur ou vers un télé-dépanneur, le système de communication à distance comprenant :
- Un organe de communication à distance choisi parmi le groupe formé d'une prise courant porteur émettrice/réceptrice, émetteur/récepteur GPRS, émetteur/récepteur WIFI.
- L'invention propose aussi un ensemble de traitement des informations à distance d'un dispositif de fabrication d'hypochlorite de sodium ou d'acide hypochloreux.
- le dispositif précédent dont l'unité de commande comprend un organe collecteur de données sur l'état de fonctionnement et de dysfonctionnement du dispositif.
- Un système de transmission des informations à distance, le système étant externe au dispositif et prévu pour communiquer par courant porteur avec l'organe collecteur de données, le système comprenant un modem d'envoi à distance des données collectées par l'organe collecteur et reçues par le système.
- Un logiciel de traitement des données transmises par le système de transmission à l'aide du modem.

Il est proposé aussi un ensemble de traitement des informations à distance d'un dispositif de fabrication d'hypochlorite de sodium ou d'acide hypochloreux, l'ensemble comprenant :
- le dispositif précédent dont l'unité de commande comprend un organe collecteur de données sur l'état de fonctionnement et de dysfonctionnement du dispositif.
- un système de transmission des informations à distance, le système étant externe à l'unité de commande et prévu pour communiquer par courant porteur avec l'organe collecteur de données, le système comprenant un modem d'envoi à distance des données collectées par l'organe collecteur et reçues par le dispositif ;
- un logiciel de traitement des données transmises par le système de transmission à l'aide du modem.

Il est proposé ensuite un procédé de traitement des informations à distance d'un dispositif de fabrication d'hypochlorite de sodium ou d'acide hypochloreux, à l'aide de l'ensemble de traitement précédent, le procédé comprenant :
- la collecte de données sur l'état de fonctionnement et de dysfonctionnement du dispositif par l'organe collecteur de données du dispositif.
- la communication, via courant porteur, au système de transmission, des données collectées par l'organe collecteur de données ;
- la transmission des données à distance par le système de transmission via son modem, les données étant traitées par le logiciel de traitement.

Le procédé peut comprendre en outre, après le traitement des données transmises à distance, l'adaptation de la commande du dispositif par l'envoi d'instructions d'adaptation de la commande du dispositif au système de transmission des informations à distance.

D'autres caractéristiques et avantages de l'invention apparaîtront à la lecture de la description détaillée qui suit des modes de réalisation de l'invention, donnés à titre d'exemple uniquement et en référence aux dessins qui montrent :
- figure 1, un schéma de principe du dispositif de fabrication d'hypochlorite de sodium ou d'acide hypochloreux 40 ;
- figure 2, un dessin de la chambre électrolytique 41 ;
- figure 3, un dessin de la cellule électrolytique 42 ;
- figure 4, un organigramme de fonctionnement du système en marche forcée et/ou en marche automatique.

Il est proposé un dispositif de fabrication d'hypochlorite de sodium ou d'acide hypochloreux, adapté à être connecté directement sur une canalisation d'eau à traiter sous pression et, un système de traitement des eaux en général. Le système de traitement des eaux comprend le dispositif proposé et la canalisation d'eau sous pression. Le système comprend alors aussi une jonction de la canalisation sous pression au dispositif.

Le dispositif proposé est adapté à des pressions de la canalisation d'eau pouvant être comprise entre 0,5 bar et 16 bar (soit entre 50 000 Pa et 1 600 000 Pa). Dans ce document, l'eau à de telles pressions est qualifiée d'eau sous pression, les pressions étant ici toutes exprimées en référence à la pression atmosphérique au niveau de la mer. La pression de l'eau à traiter dans la canalisation peut notamment dépendre du type d'installation. Pour l'eau d'un circuit de refoulement d'une piscine, la pression peut être comprise entre 2 bar et 4 bar, pour l'eau potable des circuits d'immeuble, la pression peut aller de 2 bar à 7 bar.

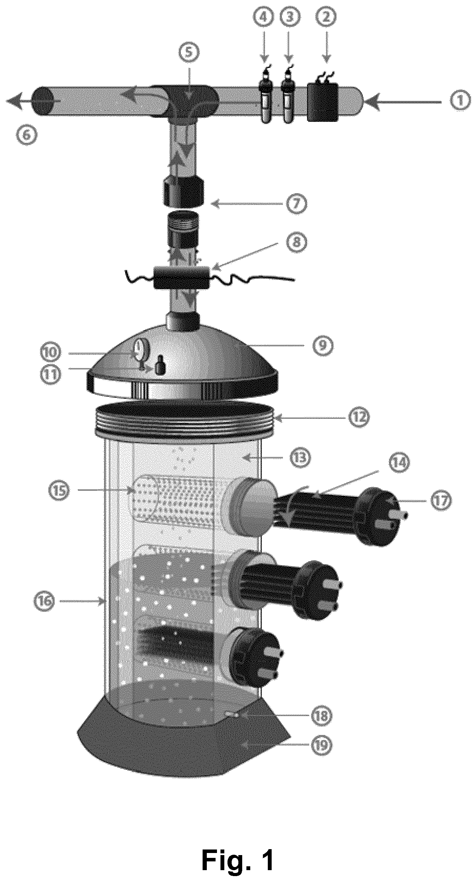

En référence à la figure 1, le dispositif 40 de fabrication d'hypochlorite de sodium ou d'acide hypochloreux comporte un cylindre 16. Le cylindre 16 peut présenter une section circulaire de diamètre préférentiel de 250 mm et de hauteur préférentielle de 800 mm. Ces dimensions ne sont pas exhaustives. De façon générale, le cylindre 16 peut présenter toute forme engendrée par une droite qui se déplace parallèlement à un axe, en s'appuyant sur deux plans fixes. Ainsi la section circulaire du cylindre 16 peut être tronquée pour présenter une partie plane 13 dans presque toute sa hauteur telle qu'illustré.

Le dispositif comprend un ou plusieurs tubes 15 qui viennent s'insérer dans le cylindre 16. Ainsi le cylindre 40 comprend l'un ou les plusieurs tubes 15. Dans la suite de ce document, l'expression "les tubes" est utilisée à la place de l'expression "l'un ou les plusieurs tubes".

Selon le mode de réalisation illustré, les tubes présentent de préférence un diamètre de 90 mm et une longueur de 210 mm et sont disposées sur la partie plane du cylindre à l'aide d'une collerette. La partie plane précédemment décrite permet avantageusement de faciliter le collage étanche des tubes 15 au cylindre 40.

Les tubes 15 du cylindre forment une ou plusieurs chambres électrolytiques (ci-après les chambres électrolytiques). Ainsi les tubes 15 délimitent des volumes spécifiques du cylindre dans lesquels les réactions d'électrolyse d'hypochlorite de sodium ou d'acide hypochloreux peuvent être réalisées.

Pour réaliser ces réactions, le dispositif proposé comprend en outre une ou plusieurs cellules électrolytiques 42 (ci-après les cellules électrolytiques 42) reçues dans les chambres électrolytiques. La matière du cylindre et des tubes peut avantageusement être transparente, par exemple en PVC transparent ou en polycarbonate transparent. En effet, le fait que la matière soit transparente permet de voir l'intérieur du cylindre 16 ainsi que l'intérieur des tubes où les réactions chimiques auront lieu.

Le cylindre 16 du dispositif proposé est un cylindre de stockage de sel, notamment sous forme solide. Le sel correspond au réactif des réactions chimiques d'électrolyse d'hypochlorite de sodium ou d'acide hypochloreux provoquées par les cellules électrolytiques. En effet, les réactions sont réalisées lorsque les cellules électrolytiques sont sous tension et qu'elles trempent dans une solution salée.

Lorsque le cylindre 16 est ouvert, il est possible d'y verser facilement du sel solide. Le sel solide est de préférence sous la forme de pastilles de sel, tel que des pastilles de sel de 2 cm de diamètre. Le cylindre 16 peut par exemple contenir une charge de sel d'environ 35 kg. Une telle charge de sel remplit le cylindre illustré en figure 1 sur toute sa hauteur. Dans le but de faciliter l'accès à l'intérieur du cylindre 16, le cylindre 16 proposé peut présenter une partie supérieure démontable. Ainsi conformément le mode de réalisation illustré, le cylindre est composé de trois parties : une partie principale du cylindre (désignée par la référence du cylindre 16), la partie supérieure démontable 9 et une partie inférieure 19 ou socle, prévue pour assurer le support de l'ensemble du dispositif 40. La partie supérieure 9 comporte une sortie en diamètre 50 mm environ où vient se coller un tube en PVC pression du même diamètre qui reçoit un raccord union 7 à coller. Ce raccord 7 permet de dissocier l'ensemble du dispositif 40 de la tuyauterie générale de l'eau à traiter. La partie supérieure 9 se fixe sur le cylindre 16, de préférence par l'intermédiaire d'un pas de vis spécifique 12, pour être démontable.

Dans le dispositif proposé, les tubes forment l'interface entre la partie du cylindre 16 stockant le sel, notamment sous forme solide, et les cellules électrolytiques reçues dans les chambres formées par les tubes. Ces tubes sont troués pour permettre la circulation d'eau saturée en sel provenant de la partie du cylindre stockant le sel. Les trous peuvent représenter de 10 % à 80 % de l'interface entre la partie de stockage de sel du cylindre et les chambres. En d'autres termes, la paroi des tubes peut être constituée de trous sur 10 % à 80 % de sa surface. De préférence, la paroi des tubes peut être constituée de trous sur 50 % à 70 % de sa surface.

Cependant, il est avantageux que le sel sous forme solide n'entre pas directement en contact avec les électrodes des cellules électrolytiques pour éviter de favoriser la formation de courts-circuits entre les électrodes des cellules. Plus particulièrement, les trous des tubes formant les chambres présentent des formes spécifiques pour empêcher le passage, dans les chambres électrolytiques, d'agglomérat solide de sel de taille suffisamment importante pour s'intercaler en contact entre des électrodes des cellules en les mettant ainsi en court-circuit. La forme et la taille de trous des tubes peuvent donc être choisies en fonction des cellules électrolytiques proposées et notamment de la distance entre les électrodes de ces cellules. Par exemple, les trous peuvent être des trous ronds de diamètre inférieur à la distance entre les électrodes des cellules. Ainsi après le chargement du cylindre avec des pastilles de sel, les pastilles de sel de taille susceptible de court-circuiter les électrodes peuvent être bloquées par les tubes sans passer dans les chambres.

De façon avantageuse, les trous des tubes peuvent présenter une forme empêchant le passage dans les chambres de pastilles de sel indépendamment de la distance entre les électrodes des cellules. Les trous sont alors adaptés à la taille des pastilles de sel versées, telles que les pastilles de sel de 2 cm de diamètre, assurant que les pastilles de sel versées ne rentrent pas dans les chambres et ne s'intercalent pas entre les électrodes des cellules. Les trous peuvent alors être ronds avec un diamètre de 2 mm à 2 cm. Les tubes troués peuvent aussi être réalisés en grillage dont le maillage est de taille suffisante pour empêcher le passage dans les chambres électrolytiques des pastilles de sel versées dans le cylindre.

Indépendamment de la forme des trous retenus pour les tubes 15, ces tubes 15 peuvent être fermés à l'une de leurs extrémités pour faciliter leur fabrication. Dans le mode de réalisation illustré, la deuxième des extrémités des tubes correspond à la collerette collée ou soudée. La collerette peut comprendre un pas de vis spécifique 12, sur laquelle va venir se visser une des cellules électrolytiques 17.

Le fonctionnement du dispositif proposé est maintenant décrit plus en détail en référence à la figure 1. Lorsque le cylindre 16 contient sa charge de sel, et que l'ensemble du dispositif 40 est fermé et raccordé au réseau, l'eau peut rentrer dans le dispositif 40 par un raccordement direct du dispositif 40 à l'aide de la jonction 7. Le raccordement direct du dispositif à la canalisation d'eau à traiter, signifie que l'eau rentrant dans le cylindre 40 est à la pression de la canalisation d'eau.

Le circuit d'eau est symbolisé par des flèches. L'air contenu dans le cylindre 16 va s'échapper par le tuyau relié au tuyau de l'arrivée d'eau générale 1 dans le réseau d'eau à traiter par la sortie du tuyau 6. L'air étant plus léger que l'eau, c'est naturellement qu'il est évacué en suivant le flux d'eau par la tuyauterie générale et par la sortie 6 qui est le sens du flux. Ainsi, lorsque la totalité de l'air s'est échappé du cylindre 16 celui-ci est parfaitement rempli d'eau.

Lorsque le cylindre 16 est totalement rempli d'eau, le cylindre 16 se retrouve sous la même pression que la canalisation ou tuyauterie d'arrivée d'eau à traiter. Le dispositif 40 est prévu pour être connecté directement sur une canalisation d'eau à traiter sous pression et le cylindre 40 est alors adapté à supporter la pression de la canalisation d'eau auquel le dispositif est relié.

Du fait du raccordement direct à la canalisation sous pression, lorsque l'air est totalement évacué du cylindre 40, les échanges entre l'eau douce de la tuyauterie 1 et l'eau saumâtre du cylindre 16 sont fortement limités voire empêchés. En particulier, les eaux dans le cylindre 16 et la canalisation étant à la même pression, il n'y a pas de mouvement d'eau saumâtre du cylindre dans la canalisation d'eau. La charge de sel du cylindre 40 n'étant alors pas dilué dans la canalisation d'eau, la consommation de sel du dispositif est limitée au sel utilisé pour les réactions d'électrolyse. En d'autres termes, le sel n'est pas dans l'eau à traiter. Ceci est notamment avantageux en comparaison aux dispositifs de l'art antérieur, précédemment décrits en deuxième catégorie, où une partie de l'eau saumâtre servant de réactif pour une électrolyse est pompée et rejetée dans l'eau à traiter. Le dispositif proposé peut en particulier être utilisé pour traiter les eaux de consommations.

Pour limiter encore plus les échanges entre l'eau douce de la tuyauterie 1 et l'eau saumâtre du cylindre 16, la pression hydrostatique peut être prise en compte, et le raccordement entre le cylindre 40 et la canalisation est réalisé en partie supérieure du cylindre tel qu'illustré. Ainsi le cylindre peut comprendre la partie supérieure 9, précédemment décrite, adaptée à assurer la connexion du dispositif avec la canalisation d'eau à traiter, par l'intermédiaire de la jonction.

La disposition en partie supérieure de la connexion du dispositif à la canalisation contribue en outre à ce que les gaz formés par l'électrolyse soient évacués du cylindre dans la canalisation, conformément aux flèches ascendantes en figure 1. Une telle évacuation des produits gazeux de l'électrolyse est alors directe du dispositif à la canalisation. Le dispositif et le système peuvent alors avantageusement être dépourvus de bac intermédiaire de dilution des gaz dans l'eau à traiter, contrairement aux arts antérieurs précédemment décrit en troisième catégorie. Une telle évacuation directe des gaz permet une diminution des risques d'explosion et de toxicité associés aux stockages des produits des réactions proposés. Dans le cas de traitement d'une installation de piscine, les gaz formés par électrolyse sont directement évacués dans la canalisation sous pression de refoulement de l'eau, canalisation sur laquelle le dispositif proposé peut être directement raccordé.

En plus des avantages précédemment mentionnés, le dispositif et le système proposé permettent de réaliser le traitement de l'eau à l'aide des produits de l'électrolyse de sel mais sans recourir à l'utilisation de membranes échangeuse d'ion. Comme précédemment mentionné lors de la description de l'art antérieur en première catégorie, de telles membranes présentent notamment le désavantage de ne bien fonctionner qu'avec des eaux adoucies. Le dispositif et le système proposé peuvent avantageusement se passer de membrane et/ou d'organe d'adoucisseurs de l'eau. De plus, le dispositif proposé est adapté à être connecté directement sur la canalisation sous pression contrairement aux membranes des dispositifs connus qui ne supportent pas une telle alimentation directe en eau à traiter sous pression.

Avec le dispositif proposé, d'éventuelles baisses de pression dans la canalisation d'eau peuvent intervenir selon l'installation dont l'eau est traitée, par exemple en cas de coupure de l'alimentation d'eau de la canalisation d'eau sous pression. Ainsi pour un bassin, pour une réserve d'eau, pour une piscine ou dans l'industrie comme une tour de refroidissement, il est possible que le local technique se trouve au-dessus du niveau d'eau. Or, lorsque la pompe de circulation de l'eau à traiter s'arrête, la pression d'eau dans le cylindre 16 et dans la tuyauterie 1 n'est plus égale, car la pression dans la tuyauterie diminue. Dans cette configuration le sel (ci-après NACL) peut migrer dans la tuyauterie principale 6 et la réserve de sel dans le cylindre 16 risque de diminuer progressivement. Pour éviter à l'utilisateur de remplir régulièrement le cylindre 16 de sel, il peut être prévu un organe empêchant sélectivement tout échange d'eau entre la canalisation et le cylindre.

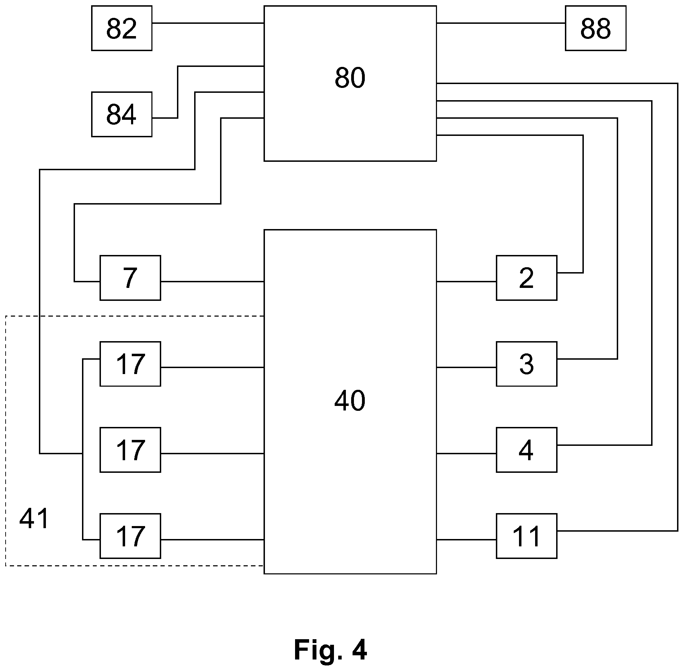

En référence à la figure 1, le dispositif 40 peut comporter une électrovanne 8, en sortie et avant la jonction à la canalisation, jonction ici illustrée par un raccord union 7. Le système peut alors comporter un détecteur de débit ou un flow switch 2 associé à une unité de commande. Ce contacteur de débit 2 détecte ou non un flux d'eau. Les gaz produits peuvent alors s'échapper dans la canalisation d'eau à traiter. S'il détecte un flux d'eau important, l'information est envoyée à l'unité de commande représenté en figure 4 par la référence 80 qui donne l'autorisation à l'électrovanne 8 de s'ouvrir. Si le capteur détecte un faible flux d'eau, l'information est envoyée à l'unité de commande qui donne l'autorisation à une électrovanne 8 de se fermer. Ces informations permettent aussi à l'unité de commande d'autoriser ou non la production d'hypochlorite de sodium en coupant la tension sur les électrodes 14, pour éviter l'accumulation de gaz produits dans le cylindre. Ainsi il est préféré qu'à chaque fois que le contacteur de débit ne détecte pas de flux d'eau, l'unité de commande 80 arrête la production d'hypochlorite de sodium ou d'acide hypochloreux et autorise la fermeture de l'électrovanne 8.

Selon un mode de réalisation alternatif non illustré, le système peut comprendre un clapet à bille inversé. Ce clapet est alors disposé de manière à aspirer de l'air à l'arrêt de la circulation d'eau dans la canalisation pour purger la canalisation. En d'autres termes, le clapet à bille inversé est situé sur la canalisation de l'eau à traiter, par exemple en aval du dispositif positionné sur la canalisation. Ainsi, lorsque la circulation de l'eau s'arrête, les canalisations se remplissent d'air et se vident de leur eau. Une partie de l'air peut rentrer dans le cylindre et pendant toute la période lors de laquelle la circulation de l'eau est arrêtée, le sel ne peut migrer du cylindre vers la canalisation. Ce mode de réalisation est particulièrement utile lorsque le dispositif 40 est situé au-dessus du niveau de l'eau d'un réservoir à traiter pour permettre que la canalisation de refoulement se vide de son eau. Ceci peut notamment être le cas d'une utilisation du dispositif pour le traitement de l'eau de refoulement d'une installation de piscine.

Selon un mode de réalisation préféré du système, le système peut comporter en amont du dispositif 40, par exemple après le détecteur de débit, une électrode de référence Redox ou Ampérométrique 3 installée dans une chambre de mesure, qui permet de déterminer le pouvoir oxydant de l'eau. Il est exprimé en mV. Deux types d'électrodes peuvent être choisies. Une électrode Redox ou une électrode d'analyse Ampérométrique.

En effet, la valeur idéale pour une eau dite de qualité, se situe entre 450 et 700 mV. Dans le dispositif ici proposé, si la valeur analysée par l'électrode Redox ou Ampérométrique 3 est inférieure à celle déterminée et enregistrée préalablement comme seuil de référence, soit 450 mV, elle informe l'unité de commande 80 pour autoriser la mise en marche du dispositif 40. Dans le sens inverse, si la valeur est supérieure, elle va informer l'unité de commande 80 pour couper le fonctionnement du dispositif 40.

Le système peut comporter aussi en amont du dispositif 40, par exemple après le détecteur de débit 2 et/ou après l'électrode Redox ou Ampérométrique 3, une électrode de référence pH, 4 installée dans une chambre de mesure, qui permet de déterminer le pH de l'eau. Le pH est représenté par une échelle qui va de 0 à 14. Au milieu 7. Au dessus de 7 on dit que le pH est basique. En dessous de 7 on dit que le pH est acide. On estime que le pH idéal pour l'eau est 7, soit neutre.

Cette électrode 4 mesure le pH de l'eau par une différence de potentiel entre l'électrode et l'eau. En fonction du résultat et du seuil déterminé et enregistré préalablement, elle informe l'unité de commande 80, qui pilote une pompe qui injecte le produit nécessaire pour amener le pH de l'eau le plus proche possible de 7, soit neutre. La qualité de l'eau sera alors parfaite et l'action stérilisante très efficace. En effet, plus le pH est acide et plus la concentration d'acide hypochloreux est importante et il n'est pas souhaitable de maintenir un pH à 6, car trop corrosif pour les installations. L'idéal est donc de maintenir un pH ente 6,8 et 7,10.

**Tableau I : efficacité bactéricide et germicide de l'acide hypochloreux (hclo) en fonction du ph, en %**

| **pH** | **HCLO %** | **OCL⁻%** |
|---|---|---|
| **6** | **96,8** | **3,2** |
| **7** | **75,2** | **24,8** |
| **7,3** | **65,5** | **34,6** |
| **7,5** | **49,0** | **51,0** |
| **8** | **23,2** | **76,8** |
| **9** | **2,9** | **97,2** |

Dans un mode de réalisation préféré, l'unité de commande 80 peut autoriser l'arrêt de la production d'hypochlorite de sodium ou d'acide hypochloreux et la fermeture de l'électrovanne 8 selon plusieurs critères.

Premier critère : lorsque l'électrode Redox ou Ampérométrique 3 a atteint la valeur donnée et préenregistrée, l'unité de commande 80 arrête la production d'hypochlorite de sodium ou d'acide hypochloreux en coupant la tension sur les électrodes des cellules électrolytiques et en fermant l'électrovanne 7. Cela permet ainsi d'avoir, toujours la même valeur d'hypochlorite de sodium ou d'acide hypochloreux dans l'eau à traiter. Lorsque cette valeur est atteinte et que l'électrovanne est fermée, il n'y a plus de contact entre l'eau à traiter et l'eau de la réserve, ce qui permet d'éviter la migration du NACL.

Deuxième critère : lorsque le détecteur de débit 2 détecte, un flux d'eau ou non dans la canalisation 1, l'unité de commande 80 arrête ou non la fabrication d'hypochlorite de sodium ou d'acide hypochloreux et ferme ou non l'électrovanne 7.

Troisième critère : pour un bassin, pour une réserve d'eau, pour une piscine ou dans l'industrie comme pour une tour de refroidissement, l'unité de commande 80 autorise l'ouverture ou la fermeture de l'électrovanne lorsque la pompe de recirculation démarre ou s'arrête. Ainsi, pendant toute la période ou le système de recirculation et de filtration d'un bassin, d'une réserve d'eau, d'une piscine ou dans l'industrie d'une tour de refroidissement est arrêté, l'eau chargée en NACL contenue dans le cylindre 16, n'est plus en contact direct avec l'eau à traiter 5 et le NACL ne migre pas.

Ex : Le seuil de la valeur de potentiel réduction est réglé à 500 mV et que la valeur mesurée est elle aussi à 500 mV, l'unité de commande 80 autorise l'arrêt de la fabrication d'hypochlorite de sodium ou d'acide hypochloreux et la fermeture de l'électrovanne 7. Ainsi, la production d'hypochlorite ne se fait plus et l'eau saturée en NACL n'est plus en contact direct avec la l'eau à traiter 5 et le NACL ne migre pas.

Quatrième critère : De la même manière, l'unité de commande 80 autorise l'arrêt de la fabrication d'hypochlorite de sodium ou d'acide hypochloreux et la fermeture de l'électrovanne 7 malgré le fait que l'analyse mesurée du potentiel Redox est en dessous du seuil choisi ex : affichage 420mV si le détecteur de débit ne détecte plus de flux d'eau dans le circuit d'eau général 1. Dans ces conditions là aussi, l'eau saturée en NACL n'est plus en contact avec la l'eau à traiter 5 et le NACL ne migre pas.

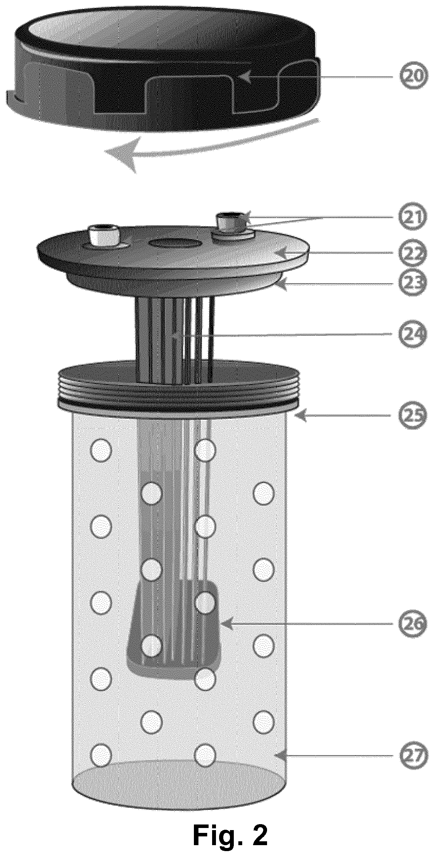

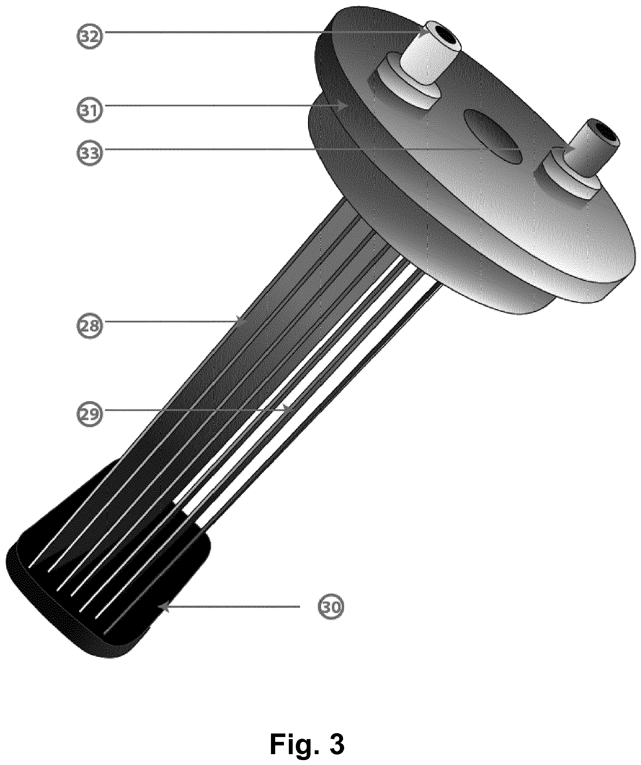

Les modes de réalisations des chambres électrolytiques sont maintenant décrits plus en détail en référence à la figure 2. Les chambres électrolytiques 41 peuvent être collées au niveau des trous de la partie plane 13 du cylindre. Ces trous présente par exemple un diamètre de 90 mm environ. Dans chacune de ces chambres électrolytiques une cellule électrolytique avec des électrodes 24 peut venir se visser. D'autres modes d'insertion de cellules électrolytiques dans les chambres peuvent être envisagées, tel qu'une insertion avec emboîtement par baïonnette. Le fait de pouvoir insérer des cellules électrolytiques avec un nombre variable d'électrodes 24 dans les chambres électrolytiques 41 du le cylindre 16 permet de traiter différents débits d'eau et de produire en forte quantité de l'hypochlorite de sodium ou de l'acide hypochloreux. Ces différentes quantités de production d'hypochlorite de sodium ou d'acide hypochloreux ont été mesurées dans les conditions suivantes :
1/ Les cellules électrolytiques sont bipolaires 42 et suivant la figure 3 comportent sept plaques 29 soit 7 électrodes d'une dimension de 210 mm de long sur 55 mm de large. Les cellules électrolytiques bipolaires correspondent à des cellules électrolytiques à changement de polarité. En d'autres termes, les électrodes 24 des cellules électrolytiques deviennent respectivement négatives et respectivement positives lors de leur utilisation.
2/ La charge de sel a été de 35 kg et les analyses ont été faites 36 heures après la mise en eau de cette charge et après la mise en route du dispositif(40).
3/ les analyses ont été effectuées avec différents % de production. Les résultats sont les suivants selon les deux tableaux:

**Tableau II: production d'hypochlorite de sodium ou d'acide hypochloreux avec une seule cellule électrolytique**

| **Production en %** | **Tension (v)** | **Courant intensité (A)** | **Production eng/h** |
|---|---|---|---|
| 10 | 2,448 | 1,5 | 3 |
| 50 | 2,98 | 4,5 | 10 |
| 100 | 3,48 | 7,9 | 15 |
| 150 | 4,01 | 11,08 | 21 |
| 200 | 4,51 | 15 | 29 |

**Tableau III : production d'hypochlorite de sodium ou d'acide hypochloreux avec deux cellules électrolytiques**

| **Production en %** | **Tension (v)** | **Courant intensité (A)** | **Production en g/h** |
|---|---|---|---|
| 10 | 2,63 | 3,1 | 7,5 |
| 50 | 3,36 | 9,4 | 22,30 |
| 100 | 4,04 | 16 | 35,8 |
| 150 | 4,78 | 23,4 | 43 |
| 200 | 5,5 | 30,9 | 58,4 |

On peut donc, constater que la production d'hypochlorite de sodium ou d'acide hypochloreux est largement suffisante pour l'ensemble des applications que nous avons mentionnées. Il est possible en plus, d'augmenter encore cette production de plusieurs façons :
1/ Soit en rajoutant une cellule électrolytiques bipolaires.
2/ Soit en augmentant le nombre de plaques ou électrodes que contiennent les cellules électrolytiques bipolaires.
3/ soit en rajoutant des dispositifs proposés supplémentaires en série.

Ces cellules électrolytiques bipolaires 42 représentées dans la figure 3 sont composées de plusieurs plaques 29 qui constituent les électrodes bipolaires 29 dont le nombre n'est pas exhaustif. De préférence, dans le dispositif proposé l'ensemble de ces plaques 29 qui composent les cellules électrolytiques bipolaires sont d'un nombre de deux à vingt exemplaires suivant la configuration, suivant le débit d'eau à traiter et suivant la quantité produite désirée, d'hypochlorite de sodium ou d'acide hypochloreux.

Entre ces différentes plaques 29 qui constituent les cellules électrolytiques bipolaires 42, circule un courant continu donné basse tension continu qui s'inverse régulièrement, par exemple toutes les 90 minutes à 180 minutes environ. En effet, une fois les plaques 29 qui constituent les cellules électrolytiques bipolaires 42 sont positives et une fois les plaques 29 qui constituent les cellules électrolytiques bipolaires 42 sont négatives et vice versa. Ce changement de polarité à pour but d'éviter leur encrassement par les ions calcium présents dans l'eau.

Dans les différents systèmes existants que nous avons décrits auparavant, ils ne réalisent pas cette inversion de polarité. L'utilisateur est donc obligé de nettoyer ses plaques régulièrement, environ toutes les semaines s'il veut que son système fonctionne correctement. Dans ce cas, ce n'est plus de l'automatisme.

Il est ainsi préféré que les cellules électrolytiques 29 (figure 3) soient bipolaires telles que précédemment décrites, afin de supprimer tous les désavantages des procédés dont nous avons parlé précédemment.

Ex : si la cellule électrolytique bipolaire 42 est composée de sept plaques 29 comme dans notre figure 3, quatre vont êtres positives et trois vont êtres négatives. Au bout de 90 minutes ou de 180 minutes de fonctionnement, le courant s'inverse et quatre vont devenir négatives et trois vont devenir positives. Le temps d'inversion de polarité peut varier de 90 à 180 minutes suivant la dureté TH de l'eau. Dans le dispositif ici proposé, elle est de préférence de 90 minutes, mais ce temps peut être augmenté, si la dureté TH de l'eau est en dessous de 25°TH. En effet, dans cette configuration, l'eau étant faiblement chargée en carbonate de calcium, il est possible d'augmenter ce temps de changement de polarité. La durée de vie des cellules électrolytiques bipolaires sera encore augmentée.

Ce changement de polarité ce fait donc régulièrement, pendant toute la durée de fonctionnement du dispositif 40. Le fait de réaliser une inversion de courant sur les plaques 29 qui constituent les cellules électrolytiques bipolaires 42 permet essentiellement le nettoyage de ces plaques 29. En effet, suivant la polarité et suivant la dureté TH de l'eau, des dépôts vont se créer sur ces plaques 29 qui constituent les cellules électrolytiques bipolaires 42. S'il n'y a pas d'inversion de polarité, après un certain temps de fonctionnement, les dépôts peuvent se fixer sur les plaques 29 et empêcher l'échange de courant entre les plaques 29 qui constituent les cellules électrolytiques bipolaires 42 et, l'électrolyse de l'eau salée ne se fait plus. En inversant régulièrement la polarité sur les plaques 29 les dépôts vont se décoller. Les plaques 29 sont ainsi toujours propres et l'échange de courant est permanent, donc une production régulière. L'avantage aussi, est que l'utilisateur n'a pas à les entretenir.

En outre, le changement de polarité peut être enregistré par l'unité de commande 80. Cet enregistrement de la polarité par l'unité de commande 80 est particulièrement utile. En effet, si le dispositif 40 est arrêté, alors que le temps de changement de polarité n'est pas écoulé ce temps restant est enregistré. Lorsque le dispositif 40 redémarre, l'unité de commande 80 reprend le décompte.

EX : le changement de polarité est fixé à 90 minutes. Le décompte se fait de la manière suivante :
L'affichage de l'unité de commande 80 indique la position de la polarité : soit sur les plaques droites 29 qui constituent les cellules électrolytiques bipolaires 42 soit sur les plaques gauche 28 qui constituent les cellules électrolytiques bipolaires 42. Le changement de polarité est enregistré et affiché. Le temps sur chaque polarité est de 90 minutes. L'afficheur affiche 90 60. Les deux premiers chiffres indiquent les minutes 90 et les deux derniers, les secondes. 60 étant 60 secondes. Les secondes décomptent pour arriver à zéro. Lorsque les secondes sont à zéro le décompte de la minute s'enclenche pour passer à 89 et ainsi de suite pendant 90 minutes. Ex : 90 60 devient 90 59 puis 90 58 puis 90 57 puis 90 56 etc. et à 90 00 devient 89 60 puis 89 59 puis 89 58 puis 89 57ect. , jusqu'à 00 00.

Si le dispositif s'arrête alors que le décompte est à l'afficheur à 5847, lorsque le dispositif 40 va redémarrer l'afficheur de l'unité de commande 80 va afficher à nouveau 5847, pour décompter à 5846, 5845, 5844 etc.... pour arriver à 5800 et passer à 5760 et ainsi de suite jusqu'à 0000. Ainsi, la durée de vie de chaque plaque 28,29 qui constitue les cellules électrolytiques bipolaires 42, aura une durée de vie égale.

Le dispositif proposé peut comporter un autre avantage utile relativement au fonctionnement du changement de polarité. Pour améliorer la durée de vie des plaques 29 qui constituent les cellules électrolytiques bipolaires 42, le dispositif 80 réalise une dépolarisation des plaques 28,29 qui constituent les cellules électrolytiques bipolaires 42, lors du changement de polarité. Si le courant bascule brutalement d'une polarité à l'autre, les plaques 28 et 29 étant métalliques restent chargées électriquement pendant un laps de temps.

Si, le changement de polarité bascule brutalement d'une polarité à l'autre, il se crée des minis courts circuits sur les plaques 28,29. Ces minis courts circuits peuvent détériorer progressivement le métal ou le graphite qui les composent. Pour éviter ce problème, il est proposé une action que nous appelons la dépolarisation de préférence dure 5 minutes et qui est commandée par l'unité de commande 80.

EX : Si la tension envoyée sur les plaques 29 qui constituent les cellules électrolytiques bipolaires 42 est de 3 volts et l'intensité de 7 ampères, lors de la dépolarisation la tension est ramenée à 0 volt et l'intensité à 0 ampère sur les plaques 29 en environ 1,5 seconde. Puis, pendant une durée déterminée, de préférence elle est de 5 minutes, les plaques 29 vont se décharger électriquement lentement dans l'eau. Lorsque cette durée est écoulée, le changement de polarité va pouvoir se faire, en alimentant progressivement cette fois-ci, les plaques 28. La tension et l'intensité vont remonter progressivement aux valeurs préalablement définies. Ainsi, la durée de vie de l'ensemble des plaques 28,29 qui constituent les cellules électrolytiques bipolaires 42 est fortement augmentée. Le fonctionnement de la dépolarisation est maintenant décrit du point de vue de l'unité de commande 80 :
A la fin du décompte du changement de polarité, les afficheurs des polarités droite et gauche affichent 00 00 ainsi que l'afficheur de la production de chlore de l'unité de commande 80. La cellule électrolytique bipolaire se décharge électriquement lentement dans l'eau. C'est la dépolarisation.

Cette opération permet d'éviter des micros ou minis courts circuits entre les plaques 28, 29. Leur durée de vie est ainsi prolongée. Cette étape dure de préférence cinq minutes et les afficheurs affichent 00 00 et s'incrémentent de 00 00 à 04 59.

Au bout de ces cinq minutes, le voyant de polarité suivant affiche de nouveau 90 60 et le décompte de polarité recommence.

Le changement de polarité se fait automatiquement, et de préférence toutes les 90 minutes.

On estime que la durée de vie des plaques 28,29 est de 9 000 à 10 000 heures de fonctionnement, avec une intensité maximum de 300 ampères au M². Avec, un changement de polarité toutes les 90 minutes et avec ce principe de dépolarisation, nous avons obtenus dans les mêmes conditions, un résultat supérieur à 11 500 heures, soit un gain de 15%. C'est donc un avantage conséquent.

Pour permettre un changement de polarité sur ces plaques 28,29 et une amélioration du rendement, elles présentent de préférence un revêtement dont les caractéristiques sont particulières.

Ces plaques 28,29 qui constituent les cellules électrolytiques (42) sont de préférence en métal et en particulier du Titane revêtu d'un revêtement d'oxydes métalliques. Le revêtement d'oxydes métalliques est par exemple constitué de 45 à 55% d'oxydes de Titane, 25 à 30 % d'oxyde de Ruthénium et 20 à 20% d'Iridium. Pour obtenir un tel mode de réalisation plusieurs couches de 10 à 15µ peuvent être déposées sur le support de base en Titane. L'ensemble peut alors être monté en température, (450°-1200°), par l'intermédiaire d'un four pour en faire un support homogène.

De façon encore préférée les dimensions des plaques 28,29 qui constituent les cellules électrolytiques 42 sont de 50 à 210 mm de long et de 15 à 65 mm de large. Elles sont de préférence séparées par un espace régulier de 2 ou 4mm. La dimension maximale des trous des tubes formant les chambres est alors de préférence inférieure à 4 mm voire 2 mm, par exemple inférieure d'un dixième de millimètre.

De façon encore préférée, pour améliorer encore la durée de vie des électrodes et leur rendement, une électrolyse est réalisée dans le cylindre 16 avec une tension, sur les plaques 28,29 qui constituent les électrodes des cellules électrolytiques bipolaires 42, très faible et une intensité réglable, (de 1 ampère à 18 ampères avec une tension de 0,20 volt à 8 volts).

EX: L'unité de commande 80 permet d'envoyer, en fonction de la fabrication d'hypochlorite de sodium ou d'acide hypochloreux choisie, une tension et une intensité variable. Cette fabrication est exprimée dans le tableau suivant en % de production. La charge de NACL dans le cylindre 16 est d'environ 35 Kg. Les tensions et les intensités envoyées entre les plaques 28,29 qui constituent les cellules électrolytiques bipolaires 42 sont les suivantes :

**Tableau IV : tensions et les intensités envoyées entre les plaques**

| **Production en %** | **Electrode 7 plaques** | |
|---|---|---|
| | **Tension (V)** | **Courant (A)** |
| **10** | 2,43 | 1,6 |
| **20** | 2,56 | 1,8 |
| **30** | 2,73 | 3,3 |
| **(40)** | 2,83 | 3,9 |
| **50** | 2,98 | 4,6 |
| **60** | 3,06 | 5,1 |
| **70** | 3,14 | 5,6 |
| **80** | 3,26 | 6,4 |
| **90** | 3,34 | 7 |
| **100** | 3,47 | 7,8 |
| **110** | 3,56 | 8,4 |
| **120** | 3,65 | 9 |
| **130** | 3,78 | 10 |
| **1(40)** | 3,87 | 10,6 |
| **150** | 4,01 | 11,6 |
| **160** | 4,09 | 12,2 |
| **170** | 4,17 | 12,8 |
| **180** | 4,3 | 13,6 |
| **190** | 4,39 | 14,2 |
| **200** | 4,51 | 15 |

Ce rapport entre la tension et l'intensité permet, une durée de vie en heures des plaques 28,29 qui constituent les électrodes des cellules électrolytiques bipolaires 42, encore plus conséquente, de l'ordre de 15 400 heures de fonctionnement au lieu des 11 500 annoncées précédemment, soit un gain de 34%.

En effet, dans les paragraphes précédents nous avons précisé que la durée de vie moyenne des plaques 29 qui constituent les cellules électrolytiques bipolaires 42 est de 9 000 à 10 000 heures de fonctionnement et, que nous avions augmenté cette durée de vie à 11 500 heures, grâce à notre principe de dépolarisation.

Cette durée de vie est liée à l'intensité envoyée sur les plaques 29 qui constituent les cellules électrolytiques bipolaires 42 soit un maximum de 300 Ampères au m² pour une fabrication optimale d'hypochlorite de sodium ou d'acide hypochloreux. Selon un mode de réalisation du dispositif proposé, le fonctionnement moyen est de 12 ampères. La surface de nos cellules électrolytiques bipolaires 42 est de 6 cm x 20 cm = 120 cm² x par le nombre de plaques (par exemple 7 plaques) soit un total de 840 cm². Pour respecter une durée de vie de 10 000 heures avec une intensité maximum de 300 Ampères au M², nos cellules électrolytiques bipolaires 42 peuvent donc recevoir en fonction de cette surface de 840 cm² jusqu'à 25, 2 Ampères. Le fonctionnement maximum peut être de 15 ampères, soit encore une amélioration du gain de durée de vie de rendement.

Ainsi, pour un mode de réalisation préféré le gain en terme de durée de vie de nos cellules électrolytiques bipolaires 42 passe de 15 400 heures de fonctionnement au lieu des 11 500 heures précédemment indiquées. Avec le principe de dépolarisation et les intensités régulées sur les plaques 28,29 qui constituent les cellules électrolytiques bipolaires 42, le gain est de 5 400 heures supplémentaires. Sur le plan technique et commercial c'est un avantage évident, car nos cellules électrolytiques 42, sont l'organe central, du dispositif 40 proposé.

Le dispositif peut comporter en outre, un manomètre 10 et un pressostat 11, qui sont fixés sur la partie supérieure 9 qui permettent de détecter une pression dans le cylindre trop importante. En fonction de l'information, le dispositif 40 de fabrication d'hypochlorite de sodium ou d'acide hypochloreux, est arrêté ou non par l'unité de commande 80.

Le manomètre 10 est par exemple gradué de 0 à 12 bars. Il permet de vérifier le bon ou le mauvais fonctionnement du dispositif 40. En effet, si la pression monte dans le cylindre 16 c'est synonyme d'une anomalie. Le pressostat 11 est calibré de telle manière qu'il réagit à cette pression trop importante. Lorsque cette pression dépasse la valeur définie, le pressostat 11 par l'intermédiaire de l'unité de commande 80 arrête le fonctionnement du dispositif 40. Il peut déclencher aussi, une alarme sonore et/ou arrêter le fonctionnement du dispositif 40. Le pressostat 11 permet une redondance du contacteur de débit 2, utile en cas de dysfonctionnement du capteur de débit 2.

Le système peut comporter dans sa partie inférieure un robinet de vidange 18. Celui-ci permet de vidanger l'ensemble du dispositif lors du remplissage en sel du cylindre 16 ou lors de son entretien.

L'ensemble du dispositif 40 est piloté par l'unité de commande 80 du système. Sur sa face avant, il peut être prévu un écran à cristaux liquides 82, ou Liquid Crystal Display en anglais soit LCD, communicant les informations sur le fonctionnement du dispositif à l'utilisateur. Il informe sur la mesure de la température de l'eau, sur le taux de pH, sur le taux d'oxydo réduction, sur le réglage des différents seuils, sur la marche automatique ou de la marche forcée, sur le temps de fonctionnement de l'appareil, sur le pourcentage de fabrication d'hypochlorite de sodium ou d'acide hypochloreux choisi ainsi que sur les différents diagnostiques.

Ainsi, l'utilisateur sait exactement si le dispositif fonctionne correctement ou non.

Tous les éléments ou organes du dispositif 40 dont la surveillance peut présenter une importance et représentés dans la figure 1, sont sous contrôle comme : le contacteur de débit 2, le fonctionnement des électrodes d'analyse 4 et3, le fonctionnement de l'électrovanne 8 et le fonctionnement des cellules électrolytiques bipolaires 17 pour la fabrication d'hypochlorite de sodium ou d'acide hypochloreux.

Plusieurs diagnostiques pour chaque pièce peuvent ainsi être déterminés. En ce qui concerne la partie mécanique : le contacteur de débit 2, l'électrovanne 7, et le pressostat 11 différentes défaillances peuvent être déterminées à l'aide de capteurs de courant et/ou de tension d'alimentation de chacun de ces organes. Il est alors possible de déterminer les défaillances suivantes :
- **DCB 01** : pas d'alimentation, pas de mesures de courant pour le contacteur de débit 2 dans le cas où le courant d'alimentation du contacteur de débit 2 n'est pas mesurée par les capteurs de l'unité de commande 80, alors qu'il est dans sa plage de fonctionnement ;
- **DEL 02 :** pas d'alimentation, pas de mesures de courant pour l'électrovanne 7 dans le cas où le courant d'alimentation de l'électrovanne 7 n'est pas mesurée par les capteurs de l'unité de commande 80, alors qu'elle est dans sa plage de fonctionnement ;
- **DCP 03 :** la valeur du capteur pression ou du pressostat 11 est anormale. La pression mesurée passe au dessus du seuil de la valeur calibrée enregistrée précédemment dans la mémoire de l'unité de commande 80.

En ce qui concerne la partie analyse, différentes défaillances peuvent être déterminées :
- **DRX 04 :** L'étalonnage de l'électrode Redox ou Ampérométrique 3 ne peut plus être étalonnée.
   L'électrode Redox ou Ampérométrique 3 n'est peut être pas connectée à l'unité de commande 80 ou elle est défectueuse ou trop ancienne.
- **DRX 05 :** L'affichage du Redox fluctue en permanence. L'électrode Redox ou Ampérométrique 3 est défectueuse ou il y a présence d'air dans le circuit d'eau 1.
- **DRX 06 :** La valeur affichée reste bloquée pendant plus de vingt minutes aux valeurs extrêmes (000 et 900 mV) où dépassent les limites des valeurs enregistrées. L'électrode Redox ou Ampérométrique 3 est défectueuse ou pas connectée à l'unité de commande 80 ou les connexions sur le Cl ou à la fiche BNC sont mal soudées dans l'unité de commande 80.
- **DRX 07 :** Les valeurs analysées dépassent les limites des valeurs enregistrées. L'électrode Redox ou Ampérométrique 3 est défectueuse ou de fausses informations sont enregistrées dans la mémoire de l'unité ce commande 80. Les valeurs d'affichages sont anormales et ne correspondent pas à des valeurs de base, enregistrées dans la mémoire de l'unité de commande 80. Problèmes de surtension ou de micro coupures électriques ;
- **DRX 08 :** Valeurs du seuil mémorisé impossible. Problèmes de connexions dans l'unité de commande 80 ou problèmes de surtension ou de micro coupures électriques.
- **DPH 09 :** L'étalonnage de l'électrode pH 4 est impossible :
   L'électrode pH 4 ne peut plus être étalonnée car trop ancienne, l'électrode pH 4 n'est peut être pas connectée à l'unité de commande 80 ou elle est défectueuse.
- **DPH 10 :** L'affichage du pH fluctue en permanence. L'électrode pH 4 est défectueuse ou il y a une présence d'air dans le circuit d'eau 1.
- **DPH 11 :** La valeur affichée reste bloquée pendant plus de vingt minutes aux valeurs extrêmes (0,57 et 10,75). L'électrode pH 4 est défectueuse ou pas connectée ou les connexions sur le Cl ou à la fiche BNC sont mal soudées dans l'unité de commande 80.
- **DPH 12 :** Les valeurs analysées dépassent les limites des valeurs enregistrées. L'électrode pH 4 est défectueuse ou de fausses informations sont enregistrées dans la mémoire de l'unité de commande 80. Les valeurs d'affichages sont anormales et ne correspondent pas à des valeurs de base, (ce qui peut être lié à des problèmes de surtension ou de micro coupures électriques) ;
- **DPH 13:** Valeurs des seuils mémorisés impossibles. Problèmes de connexions dans l'unité de commande 80 ou problèmes de surtension ou de micro coupures électriques;

En ce qui concerne la partie production d'hypochlorite de sodium ou d'acide hypochloreux, différentes défaillances peuvent être déterminées :
- **DPE 14** : La connexion des cellules électrolytiques bipolaires 42, n'est pas bonne ou les cellules électrolytiques bipolaires 42, sont débranchées, mal connectées ou oxydées. Les cellules électrolytiques bipolaires 42, ont dépassées leur durée de vie déterminée.
- **DPE 15:** Après 15 000 heures de fonctionnement du dispositif ce diagnostique apparaît. Il indique que les cellules électrolytiques bipolaires 42, sont à contrôler ou à changer.
Toutes ces informations et tous les déclenchements de diagnostiques associés peuvent être enregistrés et stockés sur 30 jours en boucle. En référence à la figure 4, lorsqu'un des éléments, ou organes, tombent en panne, l'information peut s'afficher pour l'utilisateur sur l'écran LCD 82. Différentes diodes électroluminescentes peuvent être prévues à proximité de l'écran LCD 82, en tant que témoin du fonctionnement ou dysfonctionnement des différents organes du système. On peut prévoir l'annulation de l'affichage de diagnostique par l'intervention d'une certaine manière sur les boutons situés en face avant du système 84 et à la condition que le problème affiché ait été résolu.

L'unité de commande 80 peut comprendre un système 88 de transmission des informations à distance. L'envoi d'informations au service de maintenance peut être effectué par courants porteurs via le réseau électrique alimentant le système 88 de transmission des informations à distance ou par un modem intégré système 88 de transmission des informations à distance et via le réseau téléphonique. Le système 88 de transmission des informations à distance peut être interrogé à distance pour vérifier son bon fonctionnement simplement par l'intermédiaire d'une prise électrique. Tout type d'information peut ainsi être collecté de façon centralisée comme le pourcentage de production, la consommation électrique, le nombre d'heures de fonctionnement, ainsi que les messages de diagnostiques, ou le fonctionnement des différents systèmes du dispositif pendant une durée anormale. La transmission des informations peut être réalisée vers un stockage centralisé des informations sur un serveur ou vers un télé-dépanneur. Les informations stockées à distance peuvent alors servir à assurer des services de télédépannage. L'utilisateur peut ainsi être prévenu par téléphone qu'une intervention sur le dispositif 40 doit être réalisée, et/ou, on peut lui donner l'adresse d'un spécialiste du dispositif.

Le système 88 de transmission des informations à distance peut ainsi comprendre des prises courant porteur émettrices et collectrices. Le système 88 de transmission des informations à distance peut aussi comprendre un système GPRS (*General Packet Radio Service*, soit en français : service général de transmissions radio par paquets), collecteur et émetteur des informations. On peut aussi envisager d'utiliser une connexion WIFI (*Wireless Fidelity*, soit en français une connexion fidèle sans fil) pour la transmission des informations. Alternativement, la récupération des données du système 88 de transmission des informations à distance système peut être effectuée manuellement à l'aide d'un port Universal Serial Bus, USB, de raccordement à un ordinateur ou à un support de stockage de données amovibles.

Au niveau du système 88 de transmission des informations à distance, les informations peuvent être collectées par l'unité de commande 80 par une carte "collecteur de données" interrogeant, par exemple toutes les 10 secondes, les différents organes du dispositif 40. La carte "collecteur de données" est un organe collecteur de données. Ces informations ou données reçues correctement, sont immédiatement communiquées au système 88 de transmission des informations à distance.

Selon un mode de réalisation, le système de transmission des informations à distance 88 peut être externe pour être placé au plus prés d'une prise téléphonique chez l'utilisateur du dispositif 80. Le système 88 de transmission des informations à distance 88 devient un système récepteur des informations de la carte "collecteur de données" intégré dans l'unité de commande 80. Dans un tel mode de réalisation, la communication des données collectées entre l'unité de commande 80 et le système récepteur 88 peut être réalisée par courant porteur sur le réseau domestique de l'utilisateur (par exemple réseau 220V). Les trames de données sont mémorisées, avec la date et l'heure de réception par le système récepteur 88. Le système récepteur 88 peut être composé d'un écran LCD tactile et d'un support d'intégration d'un modem.

Le support récepteur via son modem intégré peut être connecté à la ligne téléphonique de l'utilisateur du dispositif 40, permettant ainsi la transmission à un télé dépanneur ou au fabriquant du système de l'historique du fonctionnement, i.e. des données collectées par la carte "collecteur de données" et reçues par le système récepteur 88. Cette transmission de l'historique de fonctionnement peut être réalisée automatiquement lors d'un dysfonctionnement pendant une longue durée, par exemple de trois jours. De façon préférée, la transmission des informations peut avoir lieu qu'en cas de dysfonctionnement. Ainsi lors d'un dysfonctionnement, le télé dépanneur récupère toutes les données mémorisées par le système récepteur 88. Un logiciel de traitement des données ainsi reçus peut être prévu, permettant par exemple l'archivage des données, leur impression ou la réalisation de graphique.

Selon un mode de réalisation préféré, le système récepteur 88 communique avec l'unité de commande 80 du dispositif 40 pour adapter la commande au dysfonctionnement détecté. L'adaptation de la commande du dispositif peut par exemple comprendre la modification du pourcentage de production, la mise en marche forcée ou marche automatique, la modification du seuil souhaité. Selon un tel mode de réalisation, lors d'un dysfonctionnement, le système récepteur 88 envoie les données qu'il a mémorisé au télé dépanneur et reçoit en retour un rendez-vous (date et heure), à laquelle le système récepteur 88 doit rappeler le télé dépanneur pour récupérer des ordres d'adaptation de la commande du dispositif (40) pour régler le problème.

Après la détection d'un dysfonctionnement et dans le cas où aucune modification utile ne peut être effectuée par le télé dépanneur à distance, une intervention directe sur le dispositif 40 peut être prévue. L'utilisateur peut ainsi être prévenu par téléphone qu'une intervention sur le dispositif 40 doit être réalisée, et/ou, on peut lui donner l'adresse d'un spécialiste du dispositif 40.

La carte "collecteur de données", le système 88 de transmission des informations, le système récepteur 88 et le logiciel du télé dépanneur peuvent former un ensemble de traitement des informations à distance du dispositif 40. Cet ensemble de traitement des informations à distance permet de réduire les temps d'intervention pour effectuer une intervention en après vente ou de connaître, avant d'envoyer un technicien sur le terrain, quel type de panne doit être résolu. Cela permet notamment des économies des coûts de maintenance en assurant aux techniciens de partir sur le lieu d'intervention avec la pièce défectueuse et la possibilité de s'être préparé au type de panne détectée. L'ensemble de traitement des informations à distance du dispositif 40 permet aussi avantageusement d'éviter de faire déplacer un technicien alors que le dispositif 40 n'est pas en panne mais que l'utilisateur ne l'utilise pas correctement. En effet, de tels cas de déplacements inutiles peuvent représenter jusqu'à 60% des déplacements en intervention d'un technicien. L'ensemble proposé permet encore de déterminer à l'avance quelles seront les pannes possibles à l'avenir. Ainsi il est possible d'anticiper des pannes éventuelles et d'intervenir alors que l'utilisateur ne sait pas encore que l'occurrence d'un problème sur le dispositif 40 est proche. L'ensemble proposé permet encore l'amélioration de la rapidité de l'intervention ce qui est particulièrement utile pour la résolution de problème sur des pièces maîtresses du dispositif 40.

La figure 4 représente une possibilité de câblages du dispositif 40 avec l'unité de commande 80. L'unité de commande 80 est ainsi reliée à divers éléments ou organes du dispositif 40 permettant de centraliser les informations pour l'utilisateur, sur l'écran LCD 82, ou pour un centre de maintenance via le dispositif de transmission des informations, permettant un fonctionnement du dispositif 40 sous télésurveillance.

Le dispositif 40 peut comprendre un fonctionnement en marche forcée et en fonctionnement en marche automatique.

En référence à la figure 4, l'unité de commande 80 peut comprendre une interface utilisateur 84, comportant par exemple des boutons, pour sélectionner le fonctionnement en marche forcée ou en marche automatique, de régler les seuils, de régler le pourcentage de production, de réaliser un étalonnage de l'électrode Redox ou Ampérométrique et de l'électrode pH. L'interface utilisateur 84 peut aussi permettre de commander l'électrovanne 7 et/ou la production d'hypochlorite de sodium ou d'acide hypochloreux, par exemple via l'unité de commande 80.

L'interface utilisateur 84 peut aussi permettre de commander à partir de l'analyse du potentiel oxydo réducteur ou ampérométrique 3 et/ou la production d'hypochlorite de sodium ou d'acide hypochloreux, par exemple via l'unité de commande 80.

L'interface utilisateur 84 peut encore permettre à l'utilisateur de se renseigner de façon séquentielle sur l'état de fonctionnement du dispositif 40, sur la production d'hypochlorite de sodium ou d'acide hypochloreux, de la valeur du pH analysée, de la valeur analysée du Redox, ou sur les temps de fonctionnements du dispositif 40 enregistrés par l'unité de commande 80 au cours du temps.

Au cours du fonctionnement en marche forcée l'unité de commande 80 ne commande l'arrêt du dispositif 40 que lorsque la valeur mesurée du Redox 86 est atteinte. La position marche forcée sera très utile dans le cas de bassin, de réserves d'eau ou de piscines.

Au cours du fonctionnement automatique, l'unité de commande 80 optimise la production d'hypochlorite de sodium ou d'acide hypochloreux.

L'unité de commande 80 peut commander l'arrêt du dispositif 40 en coupant l'alimentation du courant continu basse tension aux cellules électrolytiques bipolaires 42, dans le cas ou le détecteur de débit 2 ne détecte plus de flux d'eau.

L'unité de commande 80 peut commander l'arrêt du dispositif 40 en coupant l'alimentation du courant continu basse tension continue aux cellules électrolytiques bipolaires 42, et en fermant l'électrovanne dans le cas ou l'unité de commande 80 est pilotée par un élément externe, comme par exemple un coffret de commande d'une pompe dans un circuit d'eau de piscine, de bassins, de réserve d'eau ou de tours de refroidissements.

L'unité de commande 80 peut commander l'arrêt du dispositif 40 en coupant l'alimentation du courant continu basse tension continue aux cellules électrolytiques bipolaires 42, dans le cas ou le résultat de l'analyse du potentiel oxydo réducteur ou Ampérométrique 86 dépasse la valeur du seuil préenregistré.

L'unité de commande 80 peut commander l'ouverture de l'électrovanne 7 dans le cas où le capteur de pression a détecté une pression anormale dans le cylindre 16 du dispositif 40.

L'unité de commande 80 peut commander l'arrêt du dispositif 40 en coupant l'alimentation du courant continu basse tension aux cellules électrolytiques bipolaires 42, dans le cas où le capteur de pression à détecté une pression anormale dans le cylindre du dispositif 40.

L'unité de commande 80 peut commander le fonctionnement du dispositif 40 pour une durée minimum. Ainsi, si juste après le début du fonctionnement du dispositif 40 de production, les conditions ne sont plus favorables, l'unité de commande 80 commande le fonctionnement pour une durée de, par exemple, trois minutes. Ceci permet d'éviter la succession de démarrages et d'arrêts du dispositif 40 trop rapprochés dans le temps. De même lorsque l'arrêt du dispositif 40 a été commandé par l'unité de commande 80, l'ordre d'arrêt peut être maintenu pendant une durée minimum, par exemple trois minutes.

EX : Si le dispositif 40 est en mode automatique et que la valeur analysée du Redox est trop proche de la valeur de consigne comme 500 mV et que l'analyse varie entre 501 et 499 et 502 et 499 etc... l'unité de commande attend minimum trois minutes pour que l'analyse se stabilise pour redonner un nouvel ordre.

Le dispositif 40 peut comprendre le système de transmission des informations à distance 88. Le dispositif 40 peut aussi comprendre un système de mémorisation de l'ensemble des informations du dispositif 40 comme :
- le pourcentage de production,
- la valeur analysée du pH de l'eau,
- la valeur analysée du potentiel Redox de l'eau,
- la valeur de pression du pressostat,
- les valeurs des seuils choisis,
- le temps de fonctionnement de l'appareil, pour déterminer le changement de ou des cellules électrolytiques bipolaires,
- le changement de polarité sur la ou les cellules électrolytiques bipolaires,
- l'occurrence de chaque coupure de courant.
- la marche automatique ou la marche forcée
- le déclenchement de diagnostiques, 15 valeurs de diagnostiques sont, par exemple, possibles.

Ces informations peuvent être enregistrées au minimum trois fois par jour sur 30 jours en boucle. Cependant il peut être préférable de conserver les informations sur l'occurrence de coupures de courant ou le déclenchement de diagnostic.

## Revendications

1. Dispositif (40) de production d'hypochlorite de sodium ou d'acide hypochloreux pour le traitement des eaux, lequel dispositif (40) est destiné à être raccordé à une canalisation d'eau à traiter sous pression d'un système de traitement des eaux, lequel dispositif (40) comporte :
- un cylindre (16) contenant du sel NaCl sous forme solide, lequel cylindre (16) est adapté pour être alimenté par de l'eau provenant directement de la canalisation d'eau à traiter sous pression afin de former de l'eau saturée en sel NaCl ou de l'eau saumâtre,
**caractérisé en ce que**
- le cylindre (16) comprend plusieurs tubes (15) qui viennent s'y insérer ; chacun desdits tubes (15) formant une chambre électrolytique destinée à générer de l'hypochlorite de sodium ou de l'acide hypochloreux par électrolyse d'eau saturée en sel NaCl ou de l'eau saumâtre, et dans laquelle vient s'insérer une cellule électrolytique munie d'électrodes (28, 29) se présentant sous forme de plaques et adaptées pour être polarisées dans les deux directions ;
chacun desdits tubes (15) étant troué de manière à permettre la mise en contact de ladite cellule électrolytique avec l'eau saturée en sel NaCl ou l'eau saumâtre et à empêcher le sel NaCl sous forme de solide d'entrer directement en contact avec lesdites électrodes ;
- le cylindre (16) présente une partie supérieure démontable (9) qui vient se fixer sur ledit cylindre par vissage et qui comporte une sortie à ladite canalisation d'eau à traiter;
- le dispositif (40) comporte un manomètre (10) destiné à mesurer la pression présente dans ledit cylindre (16), et un pressostat (11) destiné à détecter le dépassement d'une valeur prédéfinie de la pression présente dans ledit cylindre (16), ledit manomètre (10) et ledit pressostat (11) étant montés sur ladite partie supérieure démontable (9).

2. Dispositif (40) de production d'hypochlorite de sodium ou d'acide hypochloreux selon la revendication 1, **caractérisé en ce que** les électrodes (28, 29) se présentant sous forme de plaques peuvent être polarisées dans les deux directions dans des intervalles de temps allant de 90 minutes à 180 minutes suivant la dureté de l'eau.

3. Dispositif (40) de production d'hypochlorite de sodium ou d'acide hypochloreux selon la revendication 1, **caractérisé en ce que** les électrodes (28, 29) se présentant sous formes de plaques et pouvant être polarisées dans les deux directions sont réalisées en titane recouvert d'oxydes métalliques.

4. Dispositif (40) de production d'hypochlorite de sodium ou d'acide hypochloreux selon la revendication 1, **caractérisé en ce que** la sortie de la partie supérieure démontable (9) est équipée d'un tube en PVC pression doté d'un raccord union 7 qui est destiné à raccorder de façon libérable le dispositif (40) à la canalisation d'eau à traiter, ladite sortie et ledit tube ayant un diamètre d'environ 50 mm.

5. Système de traitement des eaux comprenant
- un dispositif (40) de production d'hypochlorite de sodium ou d'acide hypochloreux, selon l'une des revendications 1 à 4;
- une canalisation d'eau à traiter sous pression ;
- le cylindre (16) dudit dispositif (40) étant raccordé à ladite canalisation, au point de jonction (5), de façon à pouvoir être alimenté en eau par ladite canalisation afin de former de l'eau saturée en sel NaCl ou de l'eau saumâtre ;
- une unité de commande (80) pour commander le fonctionnement dudit dispositif (40).

6. Système de traitement des eaux selon la revendication 5, dans lequel le dispositif (40) comporte une électrovanne (8) pouvant être commandée par l'unité de commande (80) et étant susceptible de s'ouvrir pour laisser s'échapper les gaz générés dans le cylindre (16) du dispositif (40) ou pour s'ouvrir en réaction à une surpression détectée dans le cylindre (16) du dispositif (40).

7. Système de traitement des eaux selon la revendication 5 ou 6, comportant un détecteur de débit (2) configuré pour détecter un flux d'eau dans la canalisation d'eau à traiter sous pression, ledit détecteur de débit (2) étant positionné sur ladite canalisation en amont dudit point de jonction (5), et étant associé à ladite unité de commande (80) pour commander le fonctionnement dudit dispositif (40).

8. Système de traitement des eaux selon l'une des revendications 5 à 7, comportant:
- une électrode de référence Redox ou Ampérométrique (3) destinée à déterminer du pouvoir oxydant de l'eau à traiter pour réguler le pouvoir oxydant de l'eau en autorisant ou non la production d'hypochlorite de sodium ou d'acide hypochloreux, ladite électrode Redox ou Ampérométrique (3) étant disposée après le détecteur de débit (2) et en amont du point de jonction (5) du dispositif (40) et de la canalisation d'eau à traiter sous pression, ;
- après l'électrode Redox ou Ampérométrique (3), une électrode de pH (4), qui permet d'analyser et de réguler le pH de l'eau à traiter.

9. Ensemble de traitement des informations à distance d'un dispositif de fabrication d'hypochlorite de sodium ou d'acide hypochloreux, l'ensemble comprenant :
- un système selon l'une des revendications 5 à 8; et un système de transmission des informations à distance (88) vers un stockage centralisé des informations sur un serveur ou vers un télé-dépanneur comprenant un organe de communication à distance choisi parmi le groupe formé d'une prise courant porteur émettrice/réceptrice, émetteur/récepteur GPRS, émetteur/récepteur WIFI.

10. Ensemble de traitement des informations à distance d'un dispositif de fabrication d'hypochlorite de sodium ou d'acide hypochloreux, l'ensemble comprenant :
- le système selon l'une des revendications 5 à 9 dont l'unité de commande (80) comprend un organe collecteur de données sur l'état de fonctionnement et de dysfonctionnement du dispositif (40) ;
- un système de transmission des informations à distance (88), le système étant externe à l'unité de commande (80) et prévu pour communiquer par courant porteur avec l'organe collecteur de données, le système de transmission des informations à distance (88) comprenant un modem d'envoi à distance des données collectées par l'organe collecteur et reçues par l'unité de commande (80).
- un logiciel de traitement des données transmises par le système de transmission des informations à distance (88) à l'aide du modem.

11. Procédé de traitement des eaux comprenant :
la fourniture d'un dispositif (40) de production d'hypochlorite de sodium ou d'acide hypochloreux selon l'une des revendications 1 à 4 ;
le raccordement du dispositif à une canalisation de l'eau à traiter sous pression de manière à former un système de traitement des eaux selon l'une des revendications 5 à 8;
la production d'hypochlorite de sodium ou d'acide hypochloreux à l'aide du système de traitement d'eaux ;
la désinfection de l'eau à traiter à l'aide de la production d'hypochlorite de sodium ou d'acide hypochloreux.

12. Procédé de traitement selon la revendication 11, dans lequel la canalisation de l'eau à traiter sous pression est une canalisation de refoulement d'une installation de piscine.

13. Procédé de traitement des informations à distance d'un dispositif de fabrication d'hypochlorite de sodium ou d'acide hypochloreux, à l'aide de l'ensemble de traitement selon la revendication 12, le procédé comprenant :
- la collecte de données sur l'état de fonctionnement et de dysfonctionnement du dispositif (40) par l'organe collecteur de données du dispositif ;
- la communication, via courant porteur, au système de transmission des informations à distance (88), des données collectées par l'organe collecteur de données ;
- la transmission des données à distance par le système de transmission des informations à distance (88), via son modem, les données étant traitées par le logiciel de traitement.

14. Procédé de traitement selon la revendication 13, le procédé comprenant en outre, après le traitement des données transmises à distance :
- l'adaptation de la commande du dispositif (40) par l'envoi d'instructions d'adaptation de la commande du dispositif au système de transmission des informations à distance.

## Patentansprüche

1. Vorrichtung (40) zur Herstellung von Natriumhypchlorit oder Hypochlorsäure für die Wasserbehandlung, wobei die Vorrichtung (40) dazu bestimmt ist, an eine Kanalisation von zu behandelndem Wasser unter Druck eines Wasserbehandlungssystems angeschlossen zu sein, wobei die Vorrichtung (40) Folgendes umfasst:
- einen Zylinder (16), der NaCl-Salz in fester Form enthält, wobei der Zylinder (16) angepasst ist, um von dem Wasser, das direkt von der Kanalisation des zu behandelnden Wassers unter Druck stammt, versorgt zu werden, um mit NaCl-Salz gesättigtes Wasser oder Brackwasser zu bilden,
**dadurch gekennzeichnet, dass**
- der Zylinder (16) mehrere Röhren (15) umfasst, die sich in ihn einfügen;
wobei jede der Röhren (15) eine elektrolytische Kammer bildet, die dazu bestimmt ist, Natriumhypchlorit oder Hypochlorsäure durch Elektrolyse von Wasser, das mit NaCl-Salz gesättigt ist, oder von Brackwasser zu erzeugen, und in die sich eine elektrolytische Zelle, die mit Elektroden (28, 29), die die Form von Platten aufweisen und angepasst sind, um in die zwei Richtungen polarisiert zu sein, einfügt;
wobei jede der Röhren (15) derart durchbohrt ist, dass das Inberührungbringen der elektrolytischen Zelle mit dem mit NaCl-Salz gesättigten Wasser oder Brackwasser erlaubt wird und das NaCl-Salz in fester Form daran gehindert wird, direkt mit den Elektroden in Kontakt zu treten;
- der Zylinder (16) einen abnehmbaren oberen Teil (9) aufweist, der sich auf dem Zylinder durch Schrauben befestigt und einen Ausgang zu der Kanalisation von zu behandelndem Wasser umfasst;
- wobei die Vorrichtung (40) ein Manometer (10) umfasst, das dazu bestimmt ist, den Druck zu messen, der in dem Zylinder (16) vorliegt, und einen Druckregler (11), der dazu bestimmt ist, das Überschreiten eines vordefinierten Werts des Drucks, der in dem Zylinder (16) vorliegt, zu erfassen, wobei das Manometer (10) und der Druckregler (11) auf dem abnehmbaren oberen Teil (9) montiert sind.

2. Vorrichtung (40) zur Herstellung von Natriumhypchlorit oder Hypochlorsäure nach Anspruch 1, **dadurch gekennzeichnet, dass** die Elektroden (28, 29), die die Form von Platten aufweisen, in die zwei Richtungen in Zeitintervallen von 90 Minuten bis 180 Minuten in Abhängigkeit von der Härte des Wassers polarisiert werden können.

3. Vorrichtung (40) zur Herstellung von Natriumhypchlorit oder Hypochlorsäure nach Anspruch 1, **dadurch gekennzeichnet, dass** die Elektroden (28, 29), die die Form von Platten haben und in die zwei Richtungen polarisiert werden können, aus Titan mit metallischen Oxiden überzogen hergestellt sind.

4. Vorrichtung (40) zur Herstellung von Natriumhypchlorit oder Hypochlorsäure nach Anspruch 1, **dadurch gekennzeichnet, dass** der Ausgang des abnehmbaren oberen Teils (9) mit einem Rohr aus PVC Druck ausgestattet ist, das mit einer Rohrverbindung mit Überwurfmutter (7) versehen ist, das dazu bestimmt ist, die Vorrichtung (40) freigebbar mit der Kanalisation von zu behandelndem Wasser zu verbinden, wobei der Ausgang und die Röhre einen Durchmesser von etwa 50 mm aufweisen.

5. Wasserbehandlungssystem, das
- eine Vorrichtung (40) zur Herstellung von Natriumhypchlorit oder Hypochlorsäure nach einem der Ansprüche 1 bis 4 umfasst;
- eine Kanalisation von zu behandelndem Wasser unter Druck;
- wobei der Zylinder (16) der Vorrichtung (40) an die Kanalisationen an dem Verbindungspunkt (5) derart angeschlossen ist, dass er mit Wasser von der Kanalisation versorgt werden kann, um mit NaCl-Salz gesättigtes Wasser oder Brackwasser zu bilden;
- eine Steuereinheit (80), um den Betrieb der Vorrichtung (40) zu steuern.

6. Wasserbehandlungssystem nach Anspruch 5, wobei die Vorrichtung (40) ein Magnetventil (8) umfasst, das von der Steuereinheit (80) gesteuert werden kann und sich öffnen kann, um die Gase auszulassen, die in dem Zylinder (16) der Vorrichtung (40) erzeugt werden, oder um sich als Reaktion auf einen Überdruck, der in dem Zylinder (16) der Vorrichtung (40) erfasst wird, zu öffnen.

7. Wasserbehandlungssystem nach Anspruch 5 oder 6, das einen Durchflussfühler (2) umfasst, der konfiguriert ist, um einen Wasserfluss in der Kanalisation von zu behandelndem Wasser unter Druck zu erfassen, wobei der Durchflussfühler (2) auf der Kanalisation stromaufwärts des Verbindungspunkts (5) positioniert und mit der Steuereinheit (80) verbunden ist, um den Betrieb der Vorrichtung (40) zu steuern.

8. Wasserbehandlungssystem nach einem der Ansprüche 5 bis 7, das Folgendes umfasst:
- eine Redox- oder konduktometrische Elektrode (3), die dazu bestimmt ist, die Oxidationskraft des zu behandelnden Wassers zu bestimmen, um die Oxidationskraft des Wassers zu regulieren, indem die Herstellung von Natriumhypchlorit oder Hypochlorsäure gestattet wird oder nicht, wobei die Redox- oder konduktometrische Elektrode (3) nach dem Durchflussfühler (2) und stromaufwärts des Verbindungspunkts (5) der Vorrichtung (40) und der Kanalisation von zu behandelndem Wasser unter Druck angeordnet ist;
- nach der Redox- oder konduktometrischen Elektrode (3), eine pH-Elektrode (4), die es erlaubt, den pH des zu behandelnden Wassers zu analysieren und zu regulieren.

9. Fern-Informationsverarbeitungseinheit einer Herstellungsvorrichtung von Natriumhypchlorit oder Hypochlorsäure, wobei die Einheit Folgendes umfasst:
- ein System nach einem der Ansprüche 5 bis 8;
und ein Fern-Informationsübertragungssystem (88) zu einer zentralisierten Speicherung der Informationen auf einem Server oder zu einem Fern-Kundendiensttechniker, das ein Fern-Kommunikationsorgan umfasst, das aus der Gruppe ausgewählt ist, die aus einem Sender-/Empfänger-Trägerstromanschluss, GPRS-Sender/Empfänger, WiFi-Sender/Empfänger besteht.

10. Fern-Informationsverarbeitungseinheit einer Herstellungsvorrichtung von Natriumhypochlorit oder Hypochlorsäure, wobei die Einheit Folgendes umfasst:
- das System nach einem der Ansprüche 5 bis 9, dessen Steuereinheit (80) ein Organ zum Sammeln von Informationen über den Betriebs- und Betriebsstörungszustand der Vorrichtung (40) umfasst;
- ein Fern-Informationsübertragungssystem (88), wobei das System außerhalb der Steuereinheit (80) liegt und vorgesehen ist, um durch Trägerstrom mit dem Informationssammelorgan zu kommunizieren, wobei das Fern-Informationsübertragungssystem (88) ein Modem zum Fernsenden der von dem Sammelorgan gesammelten Informationen und die von der Steuereinheit (80) empfangen werden, umfasst,
- eine Verarbeitungssoftware der von dem Fern-Informationsübertragungssystem (88) mit Hilfe des Modems übertragenen Informationen.

11. Wasserbehandlungsverfahren, das Folgendes umfasst:
das Liefern einer Vorrichtung (40) zur Herstellung von Natriumhypochlorit oder Hypochlorsäure nach einem der Ansprüche 1 bis 4;
das Anschließen der Vorrichtung an eine Kanalisation von zu behandelndem Wasser unter Druck derart, dass ein Wasserbehandlungssystem nach einem der Ansprüche 5 bis 8 gebildet wird;
das Herstellen von Natriumhypochlorit oder Hypochlorsäure mit Hilfe des Wasserbehandlungssystems;
das Desinfizieren des zu behandelnden Wassers mit Hilfe der Herstellung von Natriumhypochlorit oder Hypochlorsäure.

12. Behandlungssystem nach Anspruch 11, wobei die Kanalisation des zu behandelnden Wassers unter Druck eine Förderkanalisation eines Schwimmbeckens ist.

13. Fernverarbeitungsverfahren der Daten einer Vorrichtung zur Herstellung von Natriumhypochlorit oder Hypochlorsäure mit Hilfe der Verarbeitungseinheit nach Anspruch 12, wobei das Verfahren Folgendes umfasst:
- das Sammeln von Daten über den Betriebs- und Betriebsstörungszustand der Vorrichtung (40) durch das Datensammelorgan der Vorrichtung;
- die Kommunikation über Trägerstrom zu dem Fern-Informationsübertragungssystem (88) der Daten, die von dem Datensammelorgan gesammelt werden;
- das Fernübertragen der Daten durch das Fern-Informationsübertragungssystem (88) über sein Modem, wobei die Daten von der Verarbeitungssoftware verarbeitet werden.

14. Verarbeitungsverfahren nach Anspruch 13, wobei das Verfahren außerdem nach dem Verarbeiten der fernübertragenen Daten Folgendes umfasst:
- die Anpassung der Steuerung der Vorrichtung (40) durch das Senden von Anpassungsanweisungen der Steuerung der Vorrichtung zu dem Fern-Informationsübertragungssystem.

## Claims

1. Device (40) for producing sodium hypochlorite or hypochlorous acid for water treatment, said device (40) being intended to be connected to a sewerage line for water to be treated under pressure of a water treatment system, said device (40) comprising:
- a cylinder (16) containing salt NaCl in solid form, said cylinder (16) being configured for being supplied with water coming directly from the sewerage line for water to be treated under pressure in order to form water saturated with salt NaCl or brine,
**characterized in that**
- the cylinder (16) comprises several pipes (15) that will be inserted therein; each of said pipes (15) forming an electrolysis chamber intended to generate sodium hypochlorite or hypochlorous acid by electrolysis of water saturated with salt NaCl or brine, and in which an electrolytic cell provided with electrodes (28, 29) in the form of plates and configured to be polarized in both directions will be inserted; each of said pipes (15) being perforated so as to allow said electrolytic cell to be brought into contact with water saturated with salt NaCl or brine and to prevent salt NaCl in solid form coming directly into contact with said electrodes;
- the cylinder (16) has a removable upper part (9) that will be screwed onto said cylinder and that comprises an outlet to said sewerage line for water to be treated;
- the device (40) comprises a manometer (10) intended for measuring the pressure in said cylinder (16), and a pressure switch (11) intended to detect when a predefined value of pressure in said cylinder (16) is exceeded, said manometer (10) and said pressure switch (11) being mounted on said removable upper part (9) .

2. Device (40) for producing sodium hypochlorite or hypochlorous acid according to Claim 1, **characterized in that** the electrodes (28, 29) that are in the form of plates may be polarized in both directions in time intervals ranging from 90 minutes to 180 minutes depending on the hardness of the water.

3. Device (40) for producing sodium hypochlorite or hypochlorous acid according to Claim 1, **characterized in that** the electrodes (28, 29) that are in the form of plates and that may be polarized in both directions are made of titanium covered with metal oxides.

4. Device (40) for producing sodium hypochlorite or hypochlorous acid according to Claim 1, **characterized in that** the outlet from the removable upper part (9) is equipped with a PVC pressure pipe provided with a pipe union 7 that is intended for detachably connecting the device (40) to the sewerage line for water to be treated, said outlet and said pipe having a diameter of about 50 mm.

5. Water treatment system comprising
- a device (40) for producing sodium hypochlorite or hypochlorous acid, according to one of Claims 1 to 4;
- a sewerage line for water to be treated under pressure;
- the cylinder (16) of said device (40) being connected to said sewerage line, at the junction point (5), so as to be able to be fed with water by said sewerage line in order to form water saturated with salt NaCl or brine;
- a control unit (80) for controlling the operation of said device (40).

6. Water treatment system according to Claim 5, in which the device (40) comprises a solenoid valve (8) that may be controlled by the control unit (80) and that is able to open to allow the gases generated in the cylinder (16) of the device (40) to escape or to open in response to increased pressure detected in the cylinder (16) of the device (40).

7. Water treatment system according to Claim 5 or 6, comprising a flow detector (2) configured for detecting a flow of water in the sewerage line for water to be treated under pressure, said flow detector (2) being positioned on said sewerage line upstream of said junction point (5), and being associated with said control unit (80) for controlling the operation of said device (40).

8. Water treatment system according to one of Claims 5 to 7, comprising:
- a redox or amperometric reference electrode (3) intended for determining the oxidizing power of the water to be treated to regulate the oxidizing power of the water by allowing or not allowing production of sodium hypochlorite or hypochlorous acid, said redox or amperometric electrode (3) being arranged after the flow detector (2) and upstream of the junction point (5) of the device (40) and of the sewerage line for water to be treated under pressure;
- after the redox or amperometric electrode (3), a pH electrode (4), which allows the pH of the water to be treated to be analysed and regulated.

9. Remote data processing unit of a device for producing sodium hypochlorite or hypochlorous acid, said unit comprising:
- a system according to one of Claims 5 to 8; and
- a remote data transmission system (88) for transmitting data to a centralized data store on a server or to a remote troubleshooter comprising a remote communication device selected from the group comprising an emitting/receiving carrier current connector, GPRS emitter/receiver, Wi-Fi emitter/receiver.

10. Remote data processing unit of a device for producing sodium hypochlorite or hypochlorous acid, said unit comprising:
- the system according to one of Claims 5 to 9, in which the control unit (80) comprises a device for collecting data on the state of operation and malfunction of the device (40);
- a remote data transmission system (88), the system being external to the control unit (80) and provided for communicating by carrier current with the data collecting device, the remote data transmission system (88) comprising a modem for remote sending of the data collected by the collecting device and received by the control unit (80) .
- software for processing the data transmitted by the remote data transmission system (88) by means of the modem.

11. Method of water treatment comprising:
supplying a device (40) for producing sodium hypochlorite or hypochlorous acid according to one of Claims 1 to 4;
connecting the device to a sewerage line of the water to be treated under pressure so as to form a water treatment system according to one of Claims 5 to 8;
producing sodium hypochlorite or hypochlorous acid by means of the water treatment system;
disinfecting the water to be treated by means of the production of sodium hypochlorite or hypochlorous acid.

12. Method of treatment according to Claim 11, in which the sewerage line of the water to be treated under pressure is a pressure pipe of a swimming pool installation.

13. Method for remote data processing of a device for producing sodium hypochlorite or hypochlorous acid by means of the treatment unit according to Claim 12, said method comprising:
- collecting data on the state of operation and malfunction of the device (40) by the data collecting device of the device;
- communication of the data collected by the data collecting device, via carrier current to the remote data transmission system (88);
- remote transmission of the data by the remote data transmission system (88), via its modem, the data being processed by the processing software.

14. Method of treatment according to Claim 13, said method further comprising, after processing the remote-transmitted data:
- adapting the control of the device (40) by sending instructions for adapting the control of the device to the remote data transmission system.
